# EUROPEAN PATENT APPLICATION

(11) **EP 4 531 385 A1**
(43) Date of publication of application: **02.04.2025**
(21) Application number: 23870229.4
(22) Date of filing: 06.09.2023
(51) Int. Cl.: H04M 1/72427

(54) **METHOD FOR DISPLAYING SCREEN WALLPAPER, AND ELECTRONIC DEVICE**

(30) Priority: 29.09.2022 CN 202211197258
(71) Applicant: Huawei Technologies Co., Ltd., Shenzhen, Guangdong 518129 (CN)
(72) Inventor: WANG, Xiang, Shenzhen, Guangdong 518129 (CN); XIONG, Zhangliang, Shenzhen, Guangdong 518129 (CN); LI, Li, Shenzhen, Guangdong 518129 (CN); CAO, Yuan, Shenzhen, Guangdong 518129 (CN); FAN, Zhenhua, Shenzhen, Guangdong 518129 (CN); YAN, Jinfeng, Shenzhen, Guangdong 518129 (CN); GU, Guosheng, Shenzhen, Guangdong 518129 (CN); YANG, Wanyi, Shenzhen, Guangdong 518129 (CN); WANG, Qian, Shenzhen, Guangdong 518129 (CN)
(74) Representative: MERH-IP Matias Erny Reichl Hoffmann Patentanwälte PartG mbB
(86) International application number: PCT/CN2023/117297
(87) International publication number: WO 2024/066990

(57) **Abstract**

Embodiments of this application provide a screen wallpaper display method and an electronic device, and relate to the field of terminal device technologies. The method includes: A local end may send a description parameter of a live wallpaper to at least one peer end, and both the local end and the peer end may display respective live wallpapers on respective screens based on the description parameter. **In** addition, animation effect of live wallpapers at different ends is different, so that diversity of the live wallpaper can be improved, and cross-system display of the live wallpaper can also be implemented.

## Description

This application claims priority to Chinese Patent Application No. 202211197258.6, filed with the China National Intellectual Property Administration on September 29, 2022 and entitled "SCREEN WALLPAPER DISPLAY METHOD AND ELECTRONIC DEVICE", which is incorporated herein by reference in its entirety.

### TECHNICAL FIELD

Embodiments of this application relate to the field of terminal device technologies, and in particular, to a screen wallpaper display method and an electronic device.

### BACKGROUND

With development of communication technologies, a computing capability and a hardware capability of an electronic device are improved, and the electronic device can display a wallpaper and the like on a screen.

Currently, all wallpapers displayed on screens of electronic devices are static wallpapers, and live wallpapers with animation effect cannot be displayed. This leads to poor user experience.

### SUMMARY

To resolve the foregoing technical problem, this application provides a screen wallpaper display method and an electronic device. In this method, a live wallpaper with animation effect can be displayed on a screen, bringing good user experience.

According to a first aspect, an embodiment of this application provides a screen wallpaper display method. The method is applied to a system including a first electronic device and at least one second electronic device, where the first electronic device is communicatively connected to the at least one second electronic device. The method includes: The first electronic device separately sends at least one piece of wallpaper description information to the at least one second electronic device, where any piece of wallpaper description information includes parameter information used to describe a live wallpaper; and each electronic device in the system displays a respective live wallpaper on a screen of the respective device based on respective wallpaper description information, where animation effect of live wallpapers displayed by different electronic devices in the system is different.

For example, if the at least one piece of wallpaper description information may be one piece of wallpaper description information, the wallpaper description information separately sent by the first electronic device to the at least one second electronic device is the same.

For example, a quantity of the at least one piece of wallpaper description information may be the same as a quantity of second electronic devices. Therefore, when there are a plurality of second electronic devices, there are a plurality of pieces of the at least one piece of wallpaper description information, and the first electronic device sends different wallpaper description information to different second electronic devices.

For example, when the first electronic device displays the live wallpaper on the screen of this device, wallpaper description information based on which the live wallpaper is displayed may be the same as or different from the wallpaper description information separately sent to the second electronic device.

For example, the first electronic device may display a live wallpaper 1 on the screen of this device based on wallpaper description information 1.

The first electronic device may separately send the wallpaper description information 1 to the at least one second electronic device, and each second electronic device may display a respective live wallpaper.

Although each electronic device in the system generates and displays the live wallpaper of the respective device based on a same set of wallpaper description information, animation effect of the live wallpapers displayed by the devices is different.

For another example, the first electronic device may display the live wallpaper 1 on the screen of this device based on the wallpaper description information 1.

The first electronic device may separately adjust the wallpaper description information 1, to obtain wallpaper description information 2 corresponding to each second electronic device, and send the wallpaper description information 2 to the corresponding second electronic device, where different second electronic devices have different wallpaper description information 2. In this case, each second electronic device may display a respective live wallpaper by using the received wallpaper description information 2.

In this way, each electronic device in the system displays the live wallpaper of the respective device based on different wallpaper description information, and the animation effect of the live wallpapers displayed by the devices is different.

For example, animation effect of the live wallpapers displayed by different electronic devices may be different, and the different animation effect is caused by a difference in any animation effect parameter of a drawing pattern that acts on the live wallpaper, or may be caused by a difference in parameter information describing the live wallpaper, for example, a difference in any parameter like a pattern parameter or a color parameter of a drawing pattern on which the animation effect parameter acts. This is not limited in this application.

For example, the wallpaper description information based on which the first electronic device in the system displays the live wallpaper on the screen of this device and the at least one piece of wallpaper description information sent to the at least one second electronic device may be the same or different wallpaper description information. In addition, the wallpaper description information may be generated by the first electronic device, or may be obtained from another electronic device. This is not limited in this application.

In this way, the screen of each electronic device in the system of this application may display the live wallpaper, and the animation effect of the live wallpapers are different, so that diversity of the animation effect of the live wallpapers can be improved. In addition, the system may display the live wallpapers in a cross-system manner through interaction between a plurality of electronic devices.

According to the first aspect, animation effect of live wallpapers displayed by different electronic devices in the system matches device parameters of the respective electronic devices.

For example, device parameters of different electronic devices in the system may be different. In this case, in the method of this application, the animation effect of the live wallpaper displayed on the electronic device may be adaptively adjusted with reference to the device parameter, so that the animation effect of the live wallpapers of different electronic devices adapts to the device parameters of different electronic devices.

According to the first aspect or any one of the foregoing implementations of the first aspect, the device parameter includes at least one of the following: device performance, a device form, a device interaction manner, and application data.

For example, the device performance may include but is not limited to CPU performance, GPU performance, memory performance, a screen refresh rate, and the like.

For example, the device form may include but is not limited to a device type, a screen size, a display aspect ratio, a screen shape, a screen resolution, and the like.

For example, the device interaction manner may include but is not limited to gazing at a screen by a human eye, increasing or decreasing a distance between the human eye and the screen, a folding operation on a foldable screen, an operation of sliding the screen, an operation of rotating a watch crown, and the like.

For example, the application data may include but is not limited to application data such as fitness and health data and weather data, and may be specifically flexibly configured based on a user requirement.

In this way, in a case in which at least one parameter of the device performance, the device form, the device interaction manner, and the application data of the device is different, the animation effect of the live wallpapers displayed by different electronic devices in the system may be different, so that the live wallpapers can adaptively apply to the device parameters of the electronic devices.

According to the first aspect or any one of the foregoing implementations of the first aspect, the wallpaper description information separately sent by the first electronic device to the at least one second electronic device is the same.

For example, when each second electronic device receives the same wallpaper description information, each second electronic device may adjust the received unified wallpaper description information with reference to the device parameter of the respective device, to display, by using the adjusted wallpaper description information, the live wallpaper that matches the device parameter of the respective device.

According to the first aspect or any one of the foregoing implementations of the first aspect, the wallpaper description information separately sent by the first electronic device to the at least one second electronic device is different.

For example, the first electronic device is a mobile phone, and the second electronic devices include a smartwatch and a tablet computer.

Case 1: The mobile phone may send the foregoing example wallpaper description information 1 (for example, the wallpaper description information 1 does not match any device parameter) to the smartwatch, and send the wallpaper description parameter 2 applicable to the tablet computer to the tablet computer. In this way, different second electronic devices receive different wallpaper description information.

Alternatively, Case 2: The mobile phone may separately send, to the smartwatch and the tablet computer, the respective wallpaper description information 2 that respectively adapts to the smartwatch and the tablet computer, so that different second electronic devices receive different wallpaper description information. In addition, the wallpaper description information received by each second electronic device is wallpaper description information that matches the device parameter of each second electronic device.

According to the first aspect or any one of the foregoing implementations of the first aspect, the wallpaper description information separately received by the at least one second electronic device from the first electronic device matches a device parameter of the respective device.

This implementation may correspond to the case 2 in the previous implementation. In this way, the wallpaper description information received by each second electronic device from another electronic device is the wallpaper description information that matches the device parameter of the respective device. Therefore, each second electronic device does not need to adjust the received wallpaper description information based on the device parameter of the respective device, to apply to the device parameter of the respective device, and may directly use the received wallpaper description information to parse and display the live wallpaper.

According to the first aspect or any one of the foregoing implementations of the first aspect, that each electronic device in the system displays a respective live wallpaper on a screen of the respective device based on respective wallpaper description information includes: In response to a received first user operation, each electronic device in the system plays animation effect of the respective live wallpaper on the screen of the respective device based on the respective wallpaper description information, where the first user operation is a user operation corresponding to the device interaction manner of each electronic device.

For example, the device interaction manner in the device parameter may be used to trigger to play the animation effect of the live wallpaper.

For example, the mobile phone has a foldable screen. A user folds the mobile phone, and in response to a folding operation, the mobile phone is enabled to start to play the animation effect of the live wallpaper on the screen.

For another example, when the user rotates the watch crown of the smartwatch, the smartwatch may be triggered to display a live watch face (a kind of live wallpaper) in response to a rotation operation.

In this way, animation effect playing of the live wallpaper may be associated with a specific interaction manner of the electronic device, and when the electronic device receives a user operation of a corresponding device interaction manner, the live wallpaper may be triggered to play.

According to the first aspect or any one of the foregoing implementations of the first aspect, before the first electronic device separately sends at least one piece of wallpaper description information to the at least one second electronic device, the method further includes: The first electronic device generates the at least one piece of wallpaper description information.

For example, when the first electronic device generates, by using this device, the wallpaper description information used to be sent to the second electronic devices, the first electronic device may generate same wallpaper description information without reference to a device parameter of the first electronic device, or may generate wallpaper description information that is generated with reference to a device parameter of the first electronic device and that matches the device parameter of the first electronic device. Therefore, the wallpaper description information sent by the first electronic device to the second electronic devices is the same.

Alternatively, for example, when the first electronic device (for example, the mobile phone) generates the wallpaper description information used to be sent to the second electronic devices (for example, the smartwatch and the tablet computer), the first electronic device may generate, without reference to the device parameter of the first electronic device, the same wallpaper description information that does not have a matching relationship with the device parameter, and adjust, with reference to respective device parameters of the electronic devices (for example, the mobile phone, the smartwatch, or the tablet computer), the same wallpaper description information, to separately generate wallpaper description information that matches the respective device parameter. Then, the first electronic device sends wallpaper description information corresponding to the smartwatch to the corresponding smartwatch, and sends wallpaper description information corresponding to the tablet computer to the tablet computer.

In this way, the first electronic device may flexibly generate, based on a requirement, the wallpaper description information that is unified or applicable to the device parameters of the electronic devices.

According to the first aspect or any one of the foregoing implementations of the first aspect, wallpaper description information generated at least twice by the first electronic device based on a same image is different.

For example, the first electronic device is a mobile phone, and wallpaper description information separately generated by the mobile phone twice based on a same image may be different.

For example, when generating the wallpaper description information, the mobile phone may change an initial state of at least one pattern in the wallpaper description information. When changing the initial state, the mobile phone may change an initial value of any description parameter of the pattern, to achieve the foregoing effect.

For example, for the same image, when generating the wallpaper description information, the mobile phone may change a graph of the pattern by adjusting an initial size, an initial location, and an initial color of the pattern and performing initial transformation such as cropping, rotation, zooming, rotation, translation, and mask adding on the pattern. The mobile phone may further set a coloring style for the pattern, for example, oil painting or sketching, and may further change a description parameter like an animation effect parameter of the pattern, so that the wallpaper description information generated twice is different.

For example, the mobile phone may adjust the description parameter of the wallpaper description information by using an impact factor.

For example, the impact factor may be some information extracted from the foregoing image (which may be an original image or an image obtained after processing of the original image), for example, a color of the original image or a histogram of the original image.

For example, the impact factor may alternatively be data obtained from an electronic device (the mobile phone) side that generates the wallpaper description information, for example, system time and fitness and health data.

In this way, live wallpapers generated by using a same image may be differentiated. For example, in a case in which a quantity of images in an image library used to generate the live wallpaper is limited, diversity of live wallpapers generated based on the image library can be improved.

According to the first aspect or any one of the foregoing implementations of the first aspect, live wallpapers displayed at least twice by a same electronic device in the system on a screen of the electronic device based on same wallpaper description information are different.

For example, when displaying the live wallpaper based on the wallpaper description information, the electronic device may display the live wallpaper by parsing the wallpaper description information. For example, the electronic device may obtain different results after parsing the same wallpaper description information twice (for example, the parsing result is fine-tuned by using an impact factor). In this way, different live wallpapers may be displayed based on different parsing results.

In this way, when displaying the live wallpaper, the electronic device may adjust wallpaper description information based on the same wallpaper description information, to improve diversity of the live wallpaper.

According to the first aspect or any one of the foregoing implementations of the first aspect, the system further includes at least one third electronic device, and the first electronic device is communicatively connected to the at least one third electronic device. The method further includes: The first electronic device separately generates, based on the at least one piece of wallpaper description information, a display result of a live wallpaper that matches a device parameter of the at least one third electronic device, where the display result includes a frame sequence or a frame of static wallpaper image; the first electronic device sends the corresponding display result corresponding to the at least one third electronic device to the corresponding third electronic device; and the at least one third electronic device displays, on a screen of the respective device, the corresponding display result received by the at least one third electronic device.

For example, when generating the display result of the live wallpaper for the third electronic device, the first electronic device may generate the display result of the live wallpaper based on same wallpaper description information, or may generate the display result of the live wallpaper based on different wallpaper description information. This is not limited herein.

For example, the third electronic device may be a device with a screen and with a low computing capability, for example, a smart band, or certainly may be a device with a screen and with a high computing capability. This is not limited herein.

In this way, the first electronic device may generate, based on the wallpaper description information and with reference to the device parameter of the third electronic device, the display result of the live wallpaper that matches the device parameter. In this way, the third electronic device may directly display or play the live wallpaper by using the display result, without performing operations such as parsing and rendering on the wallpaper description information, to obtain the display result. When the method is applied to the third electronic device with a low computing capability, effect is better.

According to the first aspect or any one of the foregoing implementations of the first aspect, the at least one piece of wallpaper description information includes an animation effect parameter acting on a pattern, where the animation effect parameter indicates a change rule (an example of the animation effect) of the pattern in the live wallpaper.

For example, the wallpaper description parameter herein may be wallpaper description information based on which the electronic devices in the system are configured to generate and display the live wallpaper applicable to the device parameter of the first electronic device.

According to the first aspect or any one of the foregoing implementations of the first aspect, the pattern includes a combined pattern, and patterns in the combined pattern have an array relationship.

For example, the array relationship may include but is not limited to an annular array relationship, a rectangular array relationship, and a hexagonal array relationship. An array structure corresponding to the array relationship is not limited to a regular array structure or an irregular array structure.

In this way, the pattern in the live wallpaper may be defined by using an array, and the pattern has animation effect.

According to the first aspect or any one of the foregoing implementations of the first aspect, when the combined pattern in the live wallpaper changes according to a change rule indicated by a corresponding animation effect parameter, the array relationship of the patterns in the combined pattern remains unchanged.

For example, if the mobile phone adds animation effect to a single pattern in the combined pattern, the same animation effect may be automatically configured for another pattern in the combined pattern. For example, in a plurality of hexagons in the annular array, one hexagon is scaled, and another hexagon is scaled based on a same animation effect parameter. In this way, after animation effect is applied to the combined pattern, the array relationship in the combined pattern may remain unchanged.

In this way, display performance of the live wallpaper may be improved by setting the animation effect for the combined pattern.

According to the first aspect or any one of the foregoing implementations of the first aspect, the animation effect parameter of the combined pattern includes parameter information used to change a target array parameter of the array relationship.

For example, the target array parameter may include but is not limited to at least one of the following: an array center, an array radius, an array distance, and the like, and may be specifically flexibly configured based on the animation effect.

According to the first aspect or any one of the foregoing implementations of the first aspect, when the combined pattern in the live wallpaper changes based on the corresponding animation effect parameter, a ratio relationship between the target array parameter of the combined pattern and a candidate parameter of the combined pattern remains unchanged; and the candidate parameter is a parameter that is of the combined pattern and that is changed by the animation effect parameter of the combined pattern.

For example, candidate parameters that are of the pattern and that can be changed by types of special effect of zooming, translation, rotation, blurring, color changing, transparency changing, and vector transformation are sequentially: a size ratio, a location, an angle, a blurring degree, a color parameter, transparency, and interpolation.

In this way, when the live wallpaper is displayed, if a parameter (for example, the size ratio) of the combined pattern in the live wallpaper changes based on the animation effect parameter, the array parameter of the array corresponding to the combined pattern may also change in an equal ratio, to ensure that an array structure of the combined pattern remains unchanged.

According to the first aspect or any one of the foregoing implementations of the first aspect, animation effect of live wallpapers displayed on different displays of a same electronic device in the system is different.

For example, if a same electronic device includes a plurality of displays, device forms of the plurality of displays may be different. In this case, when the electronic device displays live wallpapers on different displays based on same wallpaper description information, animation effect of the displayed live wallpapers may be different.

According to the first aspect or any one of the foregoing implementations of the first aspect, animation effect of live wallpapers displayed on different displays of a same electronic device in the system matches parameters of the displays of the electronic device.

For example, the animation effect of the live wallpapers displayed on the different displays of the same electronic device may match parameters such as shapes, sizes, and screen resolution of the displays.

In this way, different displays of the same electronic device may display different live wallpapers based on same wallpaper description information.

According to a second aspect, an embodiment of this application provides a screen wallpaper display method. The method is applied to a first electronic device. The method includes: The first electronic device displays a live wallpaper on a screen of the first electronic device based on first wallpaper description information; and the first electronic device sends at least one piece of second wallpaper description information to at least one second electronic device, where the at least one second electronic device is configured to display, based on the respective second wallpaper description information, a respective live wallpaper on a screen of the respective device, animation effect of live wallpapers displayed by the first electronic device and the at least one second electronic device is different, and any piece of wallpaper description information (any piece of the first wallpaper description information and the second wallpaper description information) includes parameter information used to describe a live wallpaper.

For example, the first wallpaper description information may be the same as or different from the second wallpaper description information. This is not limited herein.

According to the second aspect, animation effect of live wallpapers displayed by different electronic devices matches device parameters of the respective electronic devices.

According to the second aspect or any one of the foregoing implementations of the second aspect, the device parameter includes at least one of the following: device performance, a device form, a device interaction manner, and application data.

According to the second aspect or any one of the foregoing implementations of the second aspect, that the first electronic device displays a live wallpaper on a screen of the first electronic device based on first wallpaper description information includes: In response to a received second user operation, the first electronic device plays animation effect of the live wallpaper on the screen of the first electronic device based on the first wallpaper description information, where the second user operation is a user operation corresponding to a device interaction manner of the first electronic device.

According to the second aspect or any one of the foregoing implementations of the second aspect, that the at least one second electronic device displays the respective live wallpaper on the screen of the respective device based on the respective second wallpaper description information includes: In response to a received first user operation, each electronic device in the at least one second electronic device plays the animation effect of the respective live wallpaper on the screen of the respective device based on the respective second wallpaper description information, where the first user operation is a user operation corresponding to the device interaction manner of each second electronic device.

According to the second aspect or any one of the foregoing implementations of the second aspect, the wallpaper description information separately sent by the first electronic device to the at least one second electronic device is the same.

According to the second aspect or any one of the foregoing implementations of the second aspect, the wallpaper description information separately sent by the first electronic device to the at least one second electronic device is different.

According to the second aspect or any one of the foregoing implementations of the second aspect, the wallpaper description information separately received by the at least one second electronic device from the first electronic device matches a device parameter of the respective device.

According to the second aspect or any one of the foregoing implementations of the second aspect, before the first electronic device separately sends the at least one piece of second wallpaper description information to the at least one second electronic device, the method further includes: The first electronic device generates the at least one piece of wallpaper description information (the first wallpaper description information or the second wallpaper description information may be included).

According to the second aspect or any one of the foregoing implementations of the second aspect, wallpaper description information generated at least twice by the first electronic device based on a same image is different.

For example, the wallpaper description information may be the first wallpaper description information and/or the second wallpaper description information.

According to the second aspect or any one of the foregoing implementations of the second aspect, live wallpapers displayed at least twice by a same electronic device (which may be the first electronic device, the second electronic device, or the like) on a screen of the electronic device based on same wallpaper description information are different.

According to the second aspect or any one of the foregoing implementations of the second aspect, the first electronic device is communicatively connected to at least one third electronic device, and the first electronic device separately generates, based on third wallpaper description information (which may be the same as or different from the first wallpaper description information, and may be the same as or different from the second wallpaper description information, which is not limited herein), a display result of a live wallpaper that matches a device parameter of the at least one third electronic device, where the display result includes a frame sequence or a frame of static wallpaper image. The first electronic device sends the corresponding display result corresponding to the at least one third electronic device to the corresponding third electronic device; and the at least one third electronic device displays, on a screen of the respective device, the corresponding display result received by the at least one third electronic device.

According to the second aspect or any one of the foregoing implementations of the second aspect, any piece of the wallpaper description information (the first wallpaper description information, or the second wallpaper description information, or the third wallpaper description information) includes an animation effect parameter acting on a pattern, where the animation effect parameter indicates a change rule of the pattern in the live wallpaper.

According to the second aspect or any one of the foregoing implementations of the second aspect, the pattern includes a combined pattern, and patterns in the combined pattern have an array relationship.

According to the second aspect or any one of the foregoing implementations of the second aspect, when the combined pattern in the live wallpaper changes according to a change rule indicated by a corresponding animation effect parameter, the array relationship of the patterns in the combined pattern remains unchanged.

According to the second aspect or any one of the foregoing implementations of the second aspect, the animation effect parameter of the combined pattern includes parameter information used to change a target array parameter of the array relationship.

According to the second aspect or any one of the foregoing implementations of the second aspect, when the combined pattern in the live wallpaper changes based on the corresponding animation effect parameter, a ratio relationship between the target array parameter of the combined pattern and a candidate parameter of the combined pattern remains unchanged; and the candidate parameter is a parameter that is of the combined pattern and that is changed by the animation effect parameter of the combined pattern.

According to the second aspect or any one of the foregoing implementations of the second aspect, animation effect of live wallpapers displayed on different displays of a same electronic device is different.

According to the second aspect or any one of the foregoing implementations of the second aspect, animation effect of live wallpapers displayed on different displays of a same electronic device matches parameters of the displays of the electronic device.

The second aspect and any one of the implementations of the second aspect respectively correspond to the first aspect and any one of the implementations of the first aspect. For technical effect corresponding to the second aspect and any one of the implementations of the second aspect, refer to the technical effect corresponding to the manners applied to the first electronic device in the first aspect and any one of the implementations of the first aspect. Details are not described herein.

According to a third aspect, an embodiment of this application provides a screen wallpaper display method. The method is applied to a second electronic device. The method includes: The second electronic device receives wallpaper description information sent by a first electronic device; and the second electronic device displays a live wallpaper on a screen of the second electronic device based on the wallpaper description information, where animation effect of the live wallpaper displayed by the second electronic device is different from animation effect of a live wallpaper displayed by the first electronic device based on the wallpaper description information.

According to the third aspect, the animation effect of the live wallpaper displayed by the second electronic device matches a device parameter of the second electronic device.

According to the third aspect or any one of the foregoing implementations of the third aspect, the device parameter includes at least one of the following: device performance, a device form, a device interaction manner, and application data.

According to the third aspect or any one of the foregoing implementations of the third aspect, that the second electronic device displays a live wallpaper on a screen of the second electronic device based on the wallpaper description information includes: In response to a received first user operation, the second electronic device plays the animation effect of the live wallpaper on the screen of the second electronic device based on the wallpaper description information, where the first user operation is a user operation corresponding to the device interaction manner.

According to the third aspect or any one of the foregoing implementations of the third aspect, the wallpaper description information received by the second electronic device from the first electronic device may be the same as or different from the wallpaper description information based on which the first electronic device displays the live wallpaper on a screen of the first electronic device.

According to the third aspect or any one of the foregoing implementations of the third aspect, the wallpaper description information received by the second electronic device from the first electronic device matches the device parameter of the second electronic device.

According to the third aspect or any one of the foregoing implementations of the third aspect, the second electronic device receives a display result sent by the first electronic device, where the display result is a display result of a live wallpaper that matches the device parameter of the second electronic device and that is generated by the first electronic device based on any piece of the wallpaper description information; and the display result includes a frame sequence or a frame of static wallpaper image; and the second electronic device displays the received display result on the screen.

According to the third aspect or any one of the foregoing implementations of the third aspect, the wallpaper description information includes an animation effect parameter acting on a pattern, where the animation effect parameter indicates a change rule (an example of the animation effect) of the pattern in the live wallpaper.

According to the third aspect or any one of the foregoing implementations of the third aspect, the pattern includes a combined pattern, and patterns in the combined pattern have an array relationship.

According to the third aspect or any one of the foregoing implementations of the third aspect, when the combined pattern in the live wallpaper changes according to a change rule indicated by a corresponding animation effect parameter, the array relationship of the patterns in the combined pattern remains unchanged.

According to the third aspect or any one of the foregoing implementations of the third aspect, the animation effect parameter of the combined pattern includes parameter information used to change a target array parameter of the array relationship.

According to the third aspect or any one of the foregoing implementations of the third aspect, when the combined pattern in the live wallpaper changes based on the corresponding animation effect parameter, a ratio relationship between the target array parameter of the combined pattern and a candidate parameter of the combined pattern remains unchanged; and the candidate parameter is a parameter that is of the combined pattern and that is changed by the animation effect parameter of the combined pattern.

According to the third aspect or any one of the foregoing implementations of the third aspect, animation effect of live wallpapers displayed on different displays of the second electronic device is different.

According to the third aspect or any one of the foregoing implementations of the third aspect, the animation effect of the live wallpapers displayed on different displays of the second electronic device matches parameters of the displays of the electronic device.

For technical effect corresponding to the third aspect, refer to the corresponding technical effect applied to the second electronic device in the first aspect and any one of the implementations of the first aspect. Details are not described herein.

According to a fourth aspect, an embodiment of this application provides a screen wallpaper display system. The system includes the first electronic device and the at least one second electronic device in the first aspect and any one of the implementations of the first aspect.

According to the fourth aspect, the system may further include the third electronic device in the first aspect and any one of the implementations of the first aspect.

For technical effect corresponding to the fourth aspect and any one of the implementations of the fourth aspect, refer to the technical effect corresponding to the first aspect and any one of the implementations of the first aspect. Details are not described herein.

According to a fifth aspect, an embodiment of this application provides a screen wallpaper display apparatus. The apparatus is configured to perform the screen wallpaper display method in the second aspect and any one of the implementations of the second aspect, or perform the screen wallpaper display method in the third aspect and any one of the implementations of the third aspect.

For technical effect corresponding to the fifth aspect, refer to the technical effect corresponding to the second aspect and any one of the implementations of the second aspect, or refer to the technical effect corresponding to the third aspect and any one of the implementations of the third aspect. Details are not described herein.

According to a sixth aspect, an embodiment of this application provides an electronic device. The electronic device includes a memory and a processor, where the memory is coupled to the processor. The memory stores program instructions, and when the program instructions are executed by the processor, the electronic device is enabled to perform the screen wallpaper display method in the second aspect and any one of the implementations of the second aspect, or perform the screen wallpaper display method in the third aspect and any one of the implementations of the third aspect.

For technical effect corresponding to the sixth aspect, refer to the technical effect corresponding to the second aspect and any one of the implementations of the second aspect, or refer to the technical effect corresponding to the third aspect and any one of the implementations of the third aspect. Details are not described herein.

According to a seventh aspect, an embodiment of this application provides a computer-readable medium. The computer-readable medium is configured to store a computer program, and when the computer program is run on an electronic device, the electronic device is enabled to perform the screen wallpaper display method in the second aspect and any one of the implementations of the second aspect, or perform the screen wallpaper display method in the third aspect and any one of the implementations of the third aspect.

For technical effect corresponding to the seventh aspect, refer to the technical effect corresponding to the second aspect and any one of the implementations of the second aspect, or refer to the technical effect corresponding to the third aspect and any one of the implementations of the third aspect. Details are not described herein.

According to an eighth aspect, an embodiment of this application provides a computer program product including instructions. When the computer program product runs on a computer, the computer is enabled to perform the screen wallpaper display method in the second aspect and any one of the implementations of the second aspect, or perform the screen wallpaper display method in the third aspect and any one of the implementations of the third aspect.

For technical effect corresponding to the eighth aspect, refer to the technical effect corresponding to the second aspect and any one of the implementations of the second aspect, or refer to the technical effect corresponding to the third aspect and any one of the implementations of the third aspect. Details are not described herein.

According to a ninth aspect, an embodiment of this application provides a chip. The chip includes one or more interface circuits and one or more processors. The interface circuit is configured to: receive a signal from a memory of an electronic device, and send the signal to the processor, where the signal includes computer instructions stored in the memory. When the processor executes the computer instructions, the electronic device is enabled to perform the screen wallpaper display method in the second aspect and any one of the implementations of the second aspect, or perform the screen wallpaper display method in the third aspect and any one of the implementations of the third aspect.

For technical effect corresponding to the ninth aspect, refer to the technical effect corresponding to the second aspect and any one of the implementations of the second aspect, or refer to the technical effect corresponding to the third aspect and any one of the implementations of the third aspect. Details are not described herein.

### BRIEF DESCRIPTION OF DRAWINGS

To describe technical solutions in embodiments of this application more clearly, the following briefly introduces accompanying drawings for describing embodiments of this application. It is clear that the accompanying drawings in the following description show only some embodiments of this application, and a person of ordinary skill in the art may still derive other drawings from these accompanying drawings without creative efforts.
FIG. 1 is one of diagrams of an example of a structure of an electronic device;
FIG. 2 is a diagram of an example of a software structure of an electronic device;
FIG. 3A and FIG. 3B are diagrams of an example of an application scenario;
FIG. 4a is a diagram of an example of an architecture;
FIG. 4b is a diagram of an example of an architecture;
FIG. 5a is a diagram of an example of a live wallpaper display process;
FIG. 5b is an information diagram of an example of wallpaper description information;
FIG. 6a is a diagram of an example of a combined pattern;
FIG. 6b is a diagram of an example of a combined pattern;
FIG. 6c is a diagram of an example of a combined pattern;
FIG. 6d is a diagram of an example of a combined pattern;
FIG. 6e is a diagram of an example of a wallpaper generation process;
FIG. 6f is a diagram of an example of a wallpaper generation process;
FIG. 6g is a diagram of an example of a wallpaper change process;
FIG. 7 is a diagram of an example of wallpaper display of a plurality of devices;
FIG. 8 is a diagram of an example of wallpaper display of a foldable mobile phone; and
FIG. 9 is a diagram of a structure of an apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are a part rather than all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects, but are not used to describe a particular order of the objects. For example, a first target object, a second target object, and the like are used for distinguishing between different target objects, but are not used for describing a specific order of the target objects.

In embodiments of this application, a word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the descriptions of embodiments of this application, unless otherwise stated, "a plurality of" means two or more than two. For example, a plurality of processing units refers to two or more processing units, and a plurality of systems refers to two or more systems.

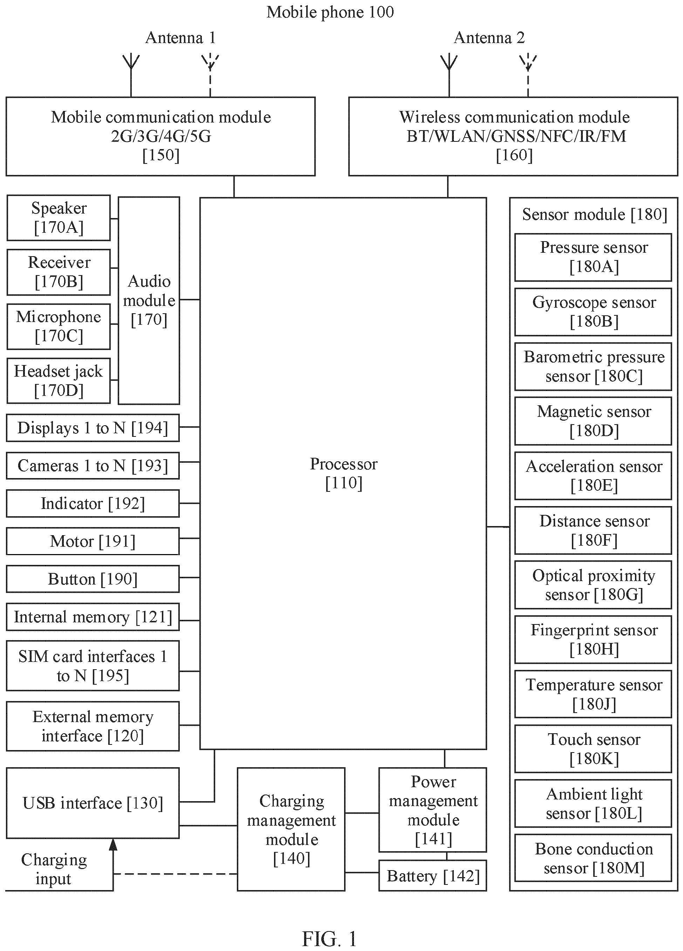

For example, FIG. 1 is a diagram of a structure of an electronic device 100. It should be understood that the electronic device 100 shown in FIG. 1 is merely an example of an electronic device, and the electronic device 100 may have more or fewer components than those shown in the figure, or may combine two or more components, or may have different component configurations. Various components shown in FIG. 1 may be implemented in hardware including one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB type-C interface, or the like. The USB interface 130 may be configured to be connected to a charger to charge the electronic device 100, or may be configured to transmit data between the electronic device 100 and a peripheral device, or may be configured to connect to a headset, to play audio by using the headset. The interface may be further configured to connect to another electronic device like an AR device.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger, or may be a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 supplies power to the electronic device by using the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may also be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into the electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal by using an audio device (not limited to the speaker 170A, the receiver 170B, and the like), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The camera 193 is configured to capture a static image or a video. An optical image of an object is generated through the lens, and is projected onto the photosensitive element.

The external memory interface 120 may be configured to connect to an external memory card, for example, a micro SD card, to expand a storage capability of the electronic device 100. The external memory card communicates with the processor 110 through the external memory interface 120, to implement a data storage function, for example, store files such as music and a video in the external memory card.

The internal memory 121 may be configured to store computer-executable program code. The executable program code includes instructions. The processor 110 runs the instructions stored in the internal memory 121, so that the electronic device 100 performs the method in embodiments of this application. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash storage device, or a universal flash storage (universal flash storage, UFS).

The electronic device 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The button 190 includes a power button, a volume button, and the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may be further compatible with an external memory card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

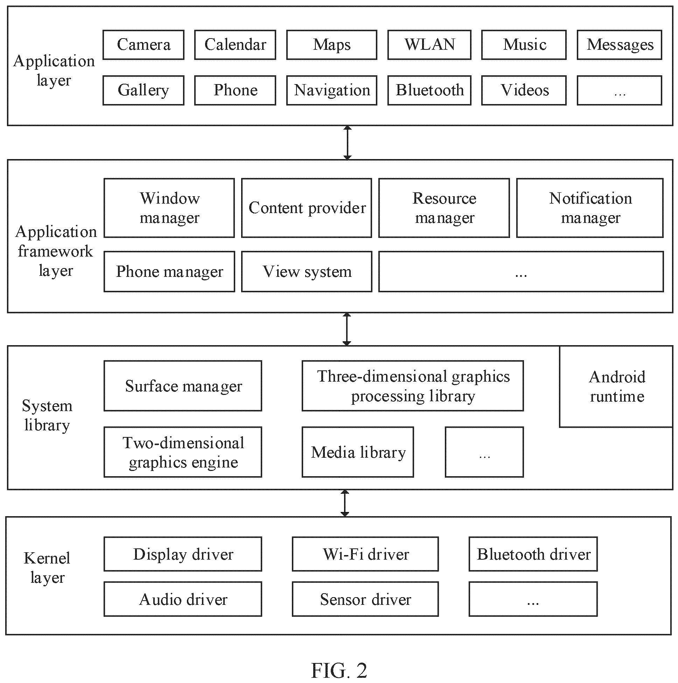

FIG. 2 is a block diagram of a software structure of the electronic device 100 according to an embodiment of this application.

In a layered architecture of the electronic device 100, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, browsing history, a bookmark, an address book, and the like.

The view system includes visual controls like a control for displaying a text and a control for displaying an image. The view system may be configured to construct an application. A display interface may include one or more views. For example, a display interface including a notification icon of Messages may include a text display view and an image display view.

The phone manager is configured to provide a communication function for the electronic device 100, for example, management of a call status (including answering, declining, or the like).

The resource manager provides, for the application, various resources like a localized character string, an icon, an image, a layout file, and a video file.

The notification manager enables the application to display notification information in the status bar, and may be configured to convey a notification type message, which may automatically disappear after a short stay without user interaction. For example, the notification manager is configured to notify download completion, give a message notification, and the like. The notification manager may alternatively be a notification that appears in a top status bar of a system in a form of graph or scroll bar text, for example, a notification of an application that is run in the background, or may be a notification that appears on a screen in a form of dialog window. For example, text information is displayed in the status bar, an alert tone is given, the electronic device vibrates, or an indicator light blinks.

The system library and runtime layer includes a system library and Android runtime (Android runtime). The system library may include a plurality of functional modules, for example, a surface manager (surface manager), a media library (media library), a three-dimensional graphics processing library (for example, OpenGL ES), and a 2D graphics engine (for example, SGL). The 3D graphics library is configured to implement three-dimensional graphics drawing, image rendering, composition, layer processing, and the like. The Android runtime includes a core library and a virtual machine. The Android runtime is responsible for scheduling and management of the Android system. The core library includes two parts: a function that needs to be called in Java language and a core library of Android. The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The surface manager is configured to manage a display subsystem and provide fusion of 2D and 3D layers for a plurality of applications.

The media library supports playback and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It can be understood that components included in the system framework layer, and the system library and runtime layer that are shown in FIG. 2 do not constitute any specific limitation on the electronic device 100. In some other embodiments of this application, the electronic device 100 may include more or fewer components than those shown in the figure, or some components may be combined, or some components may be split, or different component arrangements may be used.

Currently, in a wallpaper generation solution in the conventional technology, a static wallpaper can be generated, but a live wallpaper with animation effect cannot be generated, and consequently, user experience is poor. In addition, device parameters of different electronic devices are greatly different. In the conventional technology, adaptive display of a same wallpaper on a plurality of devices is not supported.

For a problem that a live wallpaper cannot be generated and the live wallpaper cannot be adaptively displayed on a plurality of devices in a wallpaper generation method in the conventional technology, this application provides a wallpaper generation method and an electronic device, to resolve the foregoing technical problem, so that a live wallpaper may be generated, and the live wallpaper may be adaptively displayed on a plurality of devices.

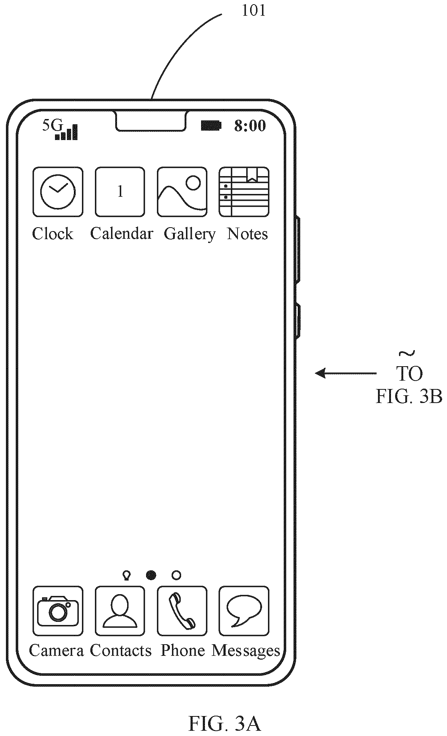

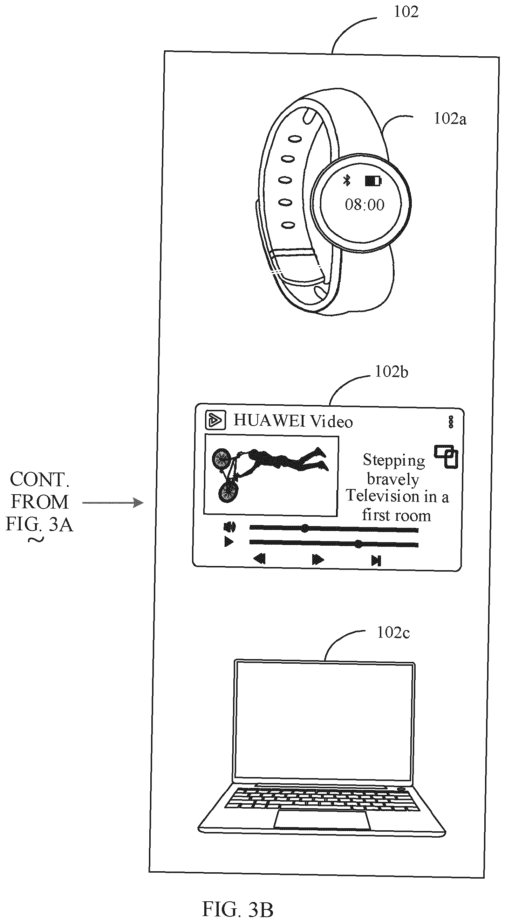

For example, FIG. 3A and FIG. 3B are a diagram of an example of an application scenario of a screen wallpaper generation method of an electronic device according to this application. The application scenario may include a first electronic device (for example, a mobile phone 101) and at least one second electronic device that is communicatively connected to the first electronic device. For example, in FIG. 3A and FIG. 3B, the at least one second electronic device may include a smartwatch 102a, a tablet computer 102b, and a notebook computer 102c. It should be understood that a quantity of second electronic devices is not limited in this application, and there may be one or more second electronic devices. A specific quantity may be determined based on an application scenario.

For example, device types of the first electronic device and the second electronic device may be electronic devices that have a screen display function, such as a mobile phone, a tablet computer, a wearable device, a vehicle-mounted device, a notebook computer, a personal computer (personal computer, PC), a netbook, and a personal digital assistant (personal digital assistant, PDA). A specific type of the first electronic device or the second electronic device is not limited in embodiments of this application.

For example, the first electronic device and any second electronic device may be electronic devices of a same type. For example, both the first electronic device and the second electronic device are mobile phones.

For example, the first electronic device and any second electronic device may be electronic devices of different types, for example, the mobile phone 101, the smartwatch 102a, the tablet computer 102b, and the notebook computer 102c shown in FIG. 3A and FIG. 3B.

In a possible implementation, the first electronic device may generate wallpaper description information based on a user input, where the wallpaper description information is a description parameter of a live wallpaper, and the wallpaper description information may be used to generate the live wallpaper. The first electronic device may send the wallpaper description information to the second electronic device. The first electronic device and the second electronic device may separately generate, with reference to device parameters of the respective devices and based on the wallpaper description information, live wallpapers applicable to the respective devices for display.

For example, when the first electronic device is configured to generate the wallpaper description information, the first electronic device may be an electronic device with high device performance (for example, a high CPU configuration). For example, the first electronic device may be a mobile phone, a tablet computer, a personal computer, or the like. For example, when the second electronic device displays the live wallpaper based on wallpaper description information received from another electronic device, the second electronic device may be an electronic device whose device performance is lower than that of the first electronic device. For example, the second electronic device may be a head unit (for example, a smart cockpit), a smartwatch, a smart band, a smart screen, or the like.

For example, the first electronic device and the second electronic device may establish a communication connection to each other in various possible manners, for example, through Bluetooth, a local area network, or by logging in to a same account. This is not limited in this application. In addition, manners of communication connections between the first electronic device and different second electronic devices may be the same or different. This is not limited in this application.

For example, the first electronic device may generate a set of wallpaper description information based on a to-be-processed image, and the wallpaper description information may be used to generate a wallpaper with animation effect. The first electronic device processes the to-be-processed image to determine a pattern, a color of the pattern, and animation effect of the pattern, and generates the wallpaper description information based on the pattern, the color of the pattern, and the animation effect of the pattern.

For example, the first electronic device may generate, based on the generated wallpaper description information, a live wallpaper applicable to the device parameter of the first electronic device.

For example, the first electronic device may further send the generated wallpaper description information to some or all of the second electronic devices that are connected to the first electronic device or that are logged in to by using a same account as the first electronic device, so that some or all of the second electronic devices may generate, based on respective device parameters, for example, at least one device parameter like a device form, device performance, an interaction manner, or application data, live wallpapers applicable to the device parameters of the respective devices.

For example, the device performance may include but is not limited to CPU performance, GPU performance, memory performance, a screen refresh rate, and the like.

For example, the device form may include but is not limited to a device type, a screen size, a display aspect ratio, a screen shape, and the like.

For example, the interaction manner may include but is not limited to gazing at a screen by a human eye, increasing or decreasing a distance between the human eye and the screen, a folding operation on a foldable screen, an operation of sliding the screen, and the like.

For example, the application data may include but is not limited to: fitness data (for example, data such as a quantity of steps and a heart rate), weather data (for example, a temperature), and the like.

In this way, the live wallpaper with the animation effect may be displayed on the screen of the electronic device, so that complex live wallpaper display can be implemented, to improve user experience. In addition, when device parameters of different devices are greatly different, the electronic device in this application may optimize wallpaper description information with reference to device parameters of a plurality of devices, so that a wallpaper can be displayed on screens of a plurality of forms of electronic devices (such as a smartwatch, a mobile phone, a head unit, and a smart band) that are ecologically connected. For example, in embodiments of this application, when a same set of wallpaper description information is applied to electronic devices with different device parameters, display effect of the live wallpaper may be flexibly adjusted based on device forms, device performance, interaction manners, application data, and the like of the devices, so that the electronic devices can adaptively display a same live wallpaper.

For structures of the first electronic device and the second electronic device, refer to the structure of the electronic device 100 in FIG. 1. Structures of the first electronic device and the second electronic device are not limited in this application.

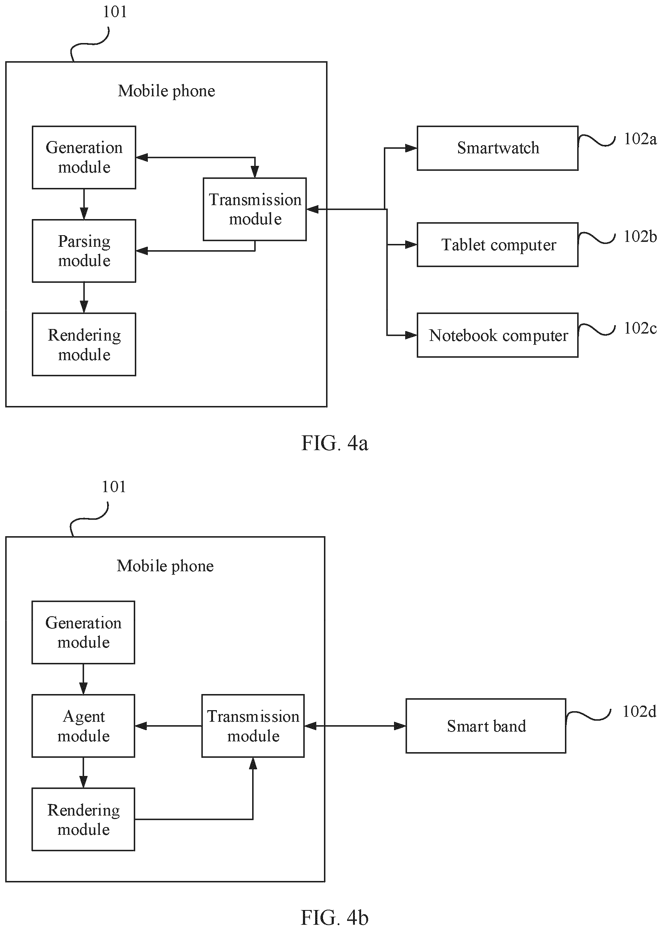

For example, with reference to FIG. 3A and FIG. 3B, FIG. 4a is a diagram of an example of a system architecture.

As shown in FIG. 4a, the mobile phone 101 is communicatively connected to the smartwatch 102a, the tablet computer 102b, and the notebook computer 102c separately.

For example, as shown in FIG. 4a, the mobile phone 101 may include a generation module, a parsing module, a rendering module, and a transmission module.

With reference to different examples, the following describes a process in which modules in the mobile phone 101, the smartwatch 102a, the tablet computer 102b, and the notebook computer 102c generate live wallpapers applicable to the respective devices.

### Example 1

For example, in FIG. 4a, the generation module may generate wallpaper description information of a live wallpaper based on a user input.

For example, the mobile phone 101 may shoot an image in response to a received photographing operation. The generation module of the mobile phone 101 may process the image or a specific area in the image via a pre-trained model, to generate wallpaper description information of a live wallpaper.

For example, the model may be a statistical language model or a neural network language model. A category and a structure of the model are not limited in this application.

For example, in FIG. 4a, the parsing module may be configured to parse the wallpaper description information with reference to device parameters such as device performance, a device form, an interaction manner, and application data of the first electronic device (the mobile phone 101 herein), to convert the wallpaper description information into a drawing command that can be executed on the first electronic device.

For example, in FIG. 4a, the rendering module may be configured to render the wallpaper to a display of the first electronic device based on the drawing command, to implement display of the live wallpaper by the mobile phone 101.

For example, in FIG. 4a, the transmission module may be configured to send the wallpaper description information that is generated by the generation module and that is of the live wallpaper to the second electronic device, for example, the smartwatch 102a, the tablet computer 102b, and the notebook computer 102c in FIG. 4a.

For example, the smartwatch 102a, the tablet computer 102b, and the notebook computer 102c in FIG. 4a may separately parse, based on device parameters such as device performance, device forms, interaction manners, and application data of the respective devices, the wallpaper description information received from the mobile phone 101, to convert the wallpaper description information into drawing commands that can be executed on the respective devices. In addition, the smartwatch 102a, the tablet computer 102b, and the notebook computer 102c separately render wallpapers to displays of the respective devices based on the drawing commands obtained by the respective devices, so that the smartwatch 102a, the tablet computer 102b, and the notebook computer 102c separately display the live wallpapers.

For example, the mobile phone 101 displays the live wallpaper as a screen-off wallpaper on the display of the mobile phone.

For example, the smartwatch 102a may display the live wallpaper as a live watch face on the display of the watch.

For example, the tablet computer 102b may display the live wallpaper as a screen-off wallpaper on the display.

For example, the notebook computer 102c may display the live wallpaper as a desktop wallpaper on the display.

It should be understood that, in this application, when live wallpapers generated by the first electronic device and the second electronic device are displayed on respective displays, a wallpaper type of the live wallpaper is not limited, and the live wallpaper may be a screen-off wallpaper, a desktop wallpaper, a live watch face, or the like, and may be specifically and flexibly configured based on an application scenario.

In addition, modules that are in the second electronic device and that are configured to implement the screen wallpaper generation method in this application are similar to the modules in the first electronic device (for example, the mobile phone 101 in FIG. 4a). Details are not described herein.

In this embodiment of this application, the first electronic device may generate one unified set of wallpaper description information, and the first electronic device and the second electronic device may adjust the wallpaper description information with reference to respective device parameters, to obtain live wallpapers applicable to the respective electronic devices.

### Example 2

For example, in FIG. 4a, the transmission module may receive the device parameters of the second electronic devices (for example, the smartwatch 102a, the tablet computer 102b, and the notebook computer 102c in FIG. 4a), for example, the device parameters such as the device performance, the device forms, the interaction manners, and the application data.

Alternatively, in FIG. 4a, the transmission module may receive respective device models of the second electronic devices (for example, the smartwatch 102a, the tablet computer 102b, and the notebook computer 102c in FIG. 4a), and then, the generation module in FIG. 4a may obtain (for example, may obtain through network query, which is not limited herein) based on the device models device parameters required by the second electronic devices.

For example, in FIG. 4a, the generation module may separately generate, based on the user input, the device parameter of the first electronic device, and the device parameters of the second electronic devices, a plurality of sets of wallpaper description information that are applicable to the first electronic device and the second electronic devices and that are used to generate live wallpapers.

For the first electronic device and the second electronic devices, categories of the device parameters corresponding to the electronic devices may be the same or different. This is not limited herein. For example, in FIG. 4a, the mobile phone 101 parses the wallpaper description information based on CPU configuration in the device performance, the smartwatch 102a parses the wallpaper description information based on the screen shape in the device form, the tablet computer 102b parses the wallpaper description information based on the screen size in the device form, and the notebook computer 102c parses the wallpaper description information based on the screen refresh rate in the device performance. In this way, when the mobile phone 101, the smartwatch 102a, the tablet computer 102b, and the notebook computer 102c generate the live wallpapers applicable to the respective devices, device parameters based on which the live wallpapers are generated are different. A specifically used device parameter may be flexibly configured based on a requirement and an application scenario. This is not limited herein.

For example, the mobile phone 101 may shoot an image in response to a received photographing operation. The generation module of the mobile phone 101 may process the image or a specific area in the image via a pre-trained model with reference to the device parameter of the first electronic device and the device parameters of the second electronic devices, to generate, based on a same image, a plurality of sets of wallpaper description information applicable to different electronic devices.

For example, in FIG. 4a, the transmission module may send, to the smartwatch 102a, the wallpaper description information that is generated by the generation module and that is of a live wallpaper applicable to the smartwatch 102a. The transmission module may further send, to the tablet computer 102b, the wallpaper description information that is generated by the generation module and that is of a live wallpaper applicable to the tablet computer 102b. The transmission module may further send, to the notebook computer 102c, the wallpaper description information that is generated by the generation module and that is of a live wallpaper applicable to the notebook computer 102c.

For example, in FIG. 4a, the parsing module may be configured to parse the set of wallpaper description information that is generated by the generation module and that adapts to the mobile phone 101, to convert the set of wallpaper description information into a drawing command that can be executed on the mobile phone 101.

For example, in FIG. 4a, the rendering module may be configured to render the wallpaper to a display of the mobile phone 101 based on the drawing command, to implement display of the live wallpaper by the mobile phone 101.

For example, the smartwatch 102a, the tablet computer 102b, and the notebook computer 102c in FIG. 4a may separately parse the sets of wallpaper description information that are received from the mobile phone 101 and that can apply to the respective device parameters, to convert the sets of wallpaper description information into corresponding drawing commands. In addition, the smartwatch 102a, the tablet computer 102b, and the notebook computer 102c separately render the wallpapers to the displays of the devices based on the drawing commands obtained by the devices, so that the smartwatch 102a, the tablet computer 102b, and the notebook computer 102c separately display the live wallpapers.

In this embodiment of this application, the first electronic device may separately generate, based on the device parameter of the first electronic device and the device parameters of the second electronic devices that are communicatively connected to the first electronic device, a plurality of sets of wallpaper description information applicable to the electronic devices. In this way, the second electronic devices may directly parse and execute the wallpaper description information received from the first electronic device, to obtain live wallpapers that can apply to the second electronic devices without adjusting the wallpaper description information with reference to the device parameters. When device performance of the second electronic device is low, or a CPU is busy, the second electronic device may quickly implement adaptive display of the live wallpaper.

### Example 3

For example, in FIG. 4a, the generation module may match wallpaper description information of a live wallpaper based on a user input.

For example, the mobile phone 101 may shoot an image 1 in response to a received photographing operation.

For example, a plurality of sets of preset wallpaper description information associated with different images may be preconfigured in the mobile phone 101. Each set of preset wallpaper description information may be generated by processing an associated image or a specific area in the image via a pre-trained model.

For example, when generating the wallpaper description information, the generation module may match the image 1 with the plurality of sets of preset wallpaper description information, to determine a set of preset wallpaper description information that matches the image 1.

In a possible implementation, each set of preset wallpaper description information in the plurality of sets of preset wallpaper description information is preset wallpaper description information that is generated based on the device parameter of the first electronic device and that adapts to the first electronic device.

For example, in FIG. 4a, the parsing module may be configured to parse the set of matched preset wallpaper description information, to convert the set of matched preset wallpaper description information into a corresponding drawing command.

For example, in FIG. 4a, the rendering module may be configured to render the wallpaper to the display of the mobile phone 101 based on the drawing command, to implement display of the live wallpaper by the mobile phone 101.

For example, in FIG. 4a, the transmission module may be configured to separately send the set of preset wallpaper description information generated by the generation module to the second electronic devices, for example, the smartwatch 102a, the tablet computer 102b, and the notebook computer 102c in FIG. 4a.

For example, the smartwatch 102a, the tablet computer 102b, and the notebook computer 102c in FIG. 4a may separately parse, based on device parameters such as device performance, device forms, interaction manners, and application data of the respective devices, the wallpaper description information received from the mobile phone 101, to convert the wallpaper description information into drawing commands that can be executed on the respective devices. In addition, the smartwatch 102a, the tablet computer 102b, and the notebook computer 102c separately render wallpapers to displays of the respective devices based on the drawing commands obtained by the respective devices, so that the smartwatch 102a, the tablet computer 102b, and the notebook computer 102c separately display the live wallpapers.

In another possible implementation, each set of preset wallpaper description information in the plurality of sets of preset wallpaper description information includes a plurality of groups of preset wallpaper description information that separately apply to the first electronic device and the at least one second electronic device (for example, including the smartwatch 102a, the tablet computer 102b, and the notebook computer 102c in FIG. 4a).

For example, the device parameter of the second electronic device is different from the device parameter of the first electronic device.

For example, in FIG. 4a, the transmission module may send, to the smartwatch 102a, a set of wallpaper description information that is matched by the generation module and that adapts to the smartwatch 102a. The transmission module may further send, to the tablet computer 102b, a set of wallpaper description information that is matched by the generation module and that adapts to the tablet computer 102b. The transmission module may further send, to the notebook computer 102c, a set of wallpaper description information that is matched by the generation module and that adapts to the notebook computer 102c.

For example, in FIG. 4a, the parsing module may be configured to parse a set of wallpaper description information that is generated by the generation module and that adapts to the mobile phone 101, to convert the set of wallpaper description information into a drawing command that can be executed on the mobile phone 101.

For example, in FIG. 4a, the rendering module may be configured to render the wallpaper to the display of the mobile phone 101 based on the drawing command, to implement display of the live wallpaper by the mobile phone 101.

For example, the smartwatch 102a, the tablet computer 102b, and the notebook computer 102c in FIG. 4a may separately parse sets of wallpaper description information that are received from the mobile phone 101 and that can apply to the respective device parameters, to convert the sets of wallpaper description information into corresponding drawing commands. In addition, the smartwatch 102a, the tablet computer 102b, and the notebook computer 102c separately render the wallpapers to the displays of the devices based on the drawing commands obtained by the devices, so that the smartwatch 102a, the tablet computer 102b, and the notebook computer 102c separately display the live wallpapers.

In this embodiment of this application, when generating the wallpaper description information based on the user input, the first electronic device may determine, in a manner of matching an image input by the user with a plurality of sets of wallpaper description information preset by a system, a set of preset wallpaper description information that matches the image, to reduce time for generating the wallpaper description information, and accelerate generation of the screen live wallpaper and multi-device display.

### Example 4

With reference to some implementations in Example 3, after the generation module matches the image 1 photographed by the user with the plurality of sets of preset wallpaper description information, to determine the set of preset wallpaper description information that matches the image 1, the mobile phone 101 may display, based on the preset wallpaper description information, a preview image (which may be a static frame image or a live frame sequence) of a live wallpaper applicable to the mobile phone 101.

When the mobile phone 101 receives a user operation indicating that the user is not satisfied with the live wallpaper automatically matched by the mobile phone, in response to the user operation, the mobile phone 101 may generate, in real time via the pre-trained model in the manner in Example 1 or Example 2, a set of matched wallpaper description information or a plurality of sets of wallpaper description information applicable to a plurality of devices for the image 1, to implement adaptive display of the live wallpaper with animation effect on the plurality of devices based on content of the image 1, so that the generated live wallpaper can meet expectation of the user, and user experience is improved.

### Example 5

In Example 1 to Example 4, an example in which the first electronic device (for example, the mobile phone 101 in FIG. 3A and FIG. 3B) generates the wallpaper description information is used to describe a process of generating the live wallpaper.

In this example, the first electronic device may alternatively receive wallpaper description information from the at least one second electronic device, where the wallpaper description information may be unified wallpaper description information generated without reference to the device parameter, or may be wallpaper description information that is generated with reference to the device parameter of the second device and that adapts to the second electronic device, or may be wallpaper description information that is generated with reference to the device parameter of the first electronic device and that adapts to the first electronic device. This is not limited in this application.

For example, in FIG. 4a, the transmission module may receive, from the tablet computer 102b, wallpaper description information applicable to the tablet computer 102b.

For example, in FIG. 4a, the parsing module may adjust, with reference to the device parameter of the mobile phone 101, the wallpaper description information received from the tablet computer 102b, and converts adjusted wallpaper description information into a drawing command that can be executed on the mobile phone 101.

For example, in FIG. 4a, the rendering module may execute the drawing command from the parsing module, to display a live wallpaper applicable to the device parameter of the mobile phone 101 on the display of the mobile phone.

It should be understood that similar implementation processes in Example 1 to Example 5 are not described repeatedly. For details, refer to an implementation process described in a related example. In addition, the implementations in Example 1 to Example 5 may be combined randomly to form a new implementation. Details are not described herein.

For example, in FIG. 4a, implementation processes of the generation module, the parsing module, and the rendering module may be implemented by executing related instruction by a CPU of the first electronic device.

For example, in FIG. 4a, the live wallpaper generated by the first electronic device may be displayed on the display of the first electronic device.

It should be understood that the modules in the mobile phone shown in FIG. 4a are merely examples. The mobile phone in this application may have more or fewer components than those shown in the figure, may combine two or more components, or may have different component configurations. Various components shown in FIG. 4a may be implemented in hardware including one or more signal processing and/or application-specific integrated circuits, software, or a combination of hardware and software.

In a possible implementation, with reference to FIG. 3A and FIG. 3B and FIG. 4a, refer to FIG. 4b. If the electronic device that receives the wallpaper description information is low in device performance, for example, the electronic device does not have a capability of parsing the wallpaper description information of the live wallpaper and/or a capability of drawing the live wallpaper, an agent module may be further configured in the mobile phone.

For example, as shown in FIG. 4b, device performance and rendering capabilities of most bands (for example, the smart band 102d) are insufficient to parse and draw the live wallpaper. The transmission module may receive device parameters such as device performance, a device form, an interaction manner, and application data of the band from the smart band 102d, and sends the device parameters to the agent module.

For example, as shown in FIG. 4b, the agent module may receive, from the generation module, unified wallpaper description information that is irrelevant to the device parameter, wallpaper description information applicable to the mobile phone 101, or wallpaper description information applicable to the smart band 102d.

For example, as shown in FIG. 4b, the agent module may parse, based on the device parameter of the smart band, the wallpaper description information received from the generation module, to obtain a drawing command applicable to the device parameter of the smart band.

For example, as shown in FIG. 4b, the rendering module may execute the drawing command to draw a plurality of frames of images (each frame of image is a static wallpaper) to generate a frame sequence; and/or, the rendering module executes the drawing command, and selects, according to a preset policy (not limited), a frame of image from the drawn plurality of frames of images as the static wallpaper.

For example, as shown in FIG. 4b, the transmission module may send the frame sequence and/or the static wallpaper generated by the rendering module to the smart band 102d.

For example, the smart band 102d may play the received frame sequence, to display a live wallpaper applicable to the device parameter of the smart band, where the live wallpaper may be a screen wallpaper of the smart band 102d; and/or, the smart band 102d displays the static wallpaper on a screen of the band as a static wallpaper of the band.

In this embodiment of this application, the frame sequence and the static wallpaper have a low requirement on device performance (for example, a computing capability) of the device. In this way, in this embodiment of this application, wallpaper description information of a wallpaper used on an electronic device with a low computing capability may be parsed and rendered on an electronic device with a high computing capability, to transfer a generated displayable wallpaper result (a frame sequence and/or a static image) directly to the electronic device with the low computing capability. In this way, the electronic device with the low computing capability may directly output and display the received wallpaper result, so that the electronic device with the low computing capability may also support setting of the live wallpaper.

It should be understood that an implementation in which the agent module is used to parse and render the wallpaper description information to generate the displayable wallpaper result is not limited to the electronic device with the low computing capability, and the wallpaper result may alternatively be sent to the electronic device with the high computing capability. This is not limited in this application.

It should be understood that the modules shown in the structure of the mobile phone 101 in FIG. 4a and FIG. 4b may continue to be split or combined. In addition, modules with a same name in FIG. 4a and FIG. 4b represent a same module, and similar processes are not described herein. For details, refer to the description of the related embodiment in FIG. 4a.

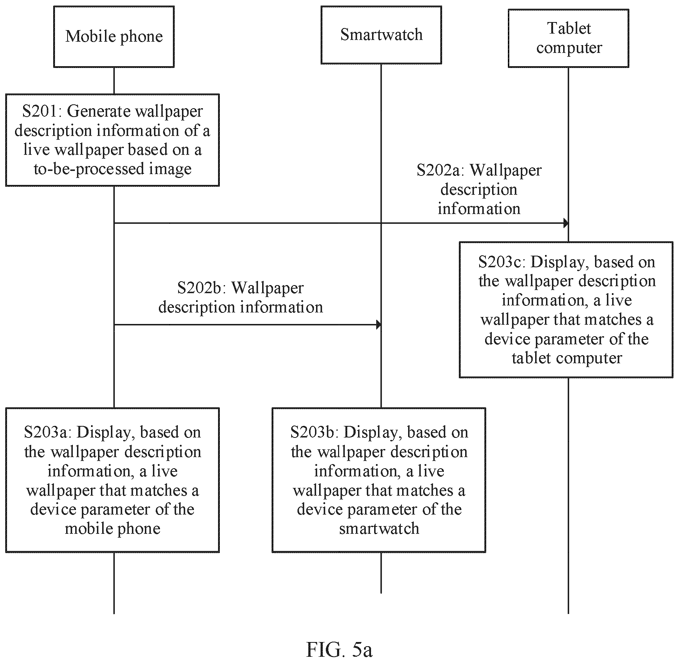

With reference to any one of the foregoing implementations, FIG. 5a is a sequence diagram of an example of a process of generating a screen wallpaper in the application scenarios of FIG. 4a and FIG. 4b. As shown in FIG. 5a, the process may include the following steps.

S201: A mobile phone generates wallpaper description information of a live wallpaper based on a to-be-processed image.

For example, the to-be-processed image may be a basic image used to generate a screen wallpaper. For example, the mobile phone may generate the wallpaper description information of the live wallpaper based on a series of processing performed on the to-be-processed image.

For example, the to-be-processed image may be an image shot by the mobile phone in real time. For example, under an operation of a user, the mobile phone may invoke a camera apparatus, for example, a front-facing camera or a rear-facing camera to photograph any object or scene to obtain the to-be-processed image.

Alternatively, for example, the to-be-processed image may alternatively be any image stored in an album or another storage unit of the mobile phone. For example, the mobile phone may select an image from the album as the to-be-processed image in response to the operation of the user. This is not limited in this application.

For example, the to-be-processed image may be a complete image, or may be an image area in a complete image. The image area may include a regular image area or an irregular image area. This is not limited in this application.

For example, the to-be-processed image may be an image in any file format. For example, the to-be-processed image may be an image in a format of, for example, joint photographic experts group (joint photographic experts group, jpeg), scalable vector graphics (scalable vector graphics, SVG), or bitmap (bitmap). A format of the to-be-processed image is not limited in embodiments of this application.

For example, the mobile phone may process the to-be-processed image by using an artificial intelligence (artificial intelligence, AI) technology, to obtain wallpaper description information that matches the to-be-processed image.

In a possible implementation, the mobile phone may process the to-be-processed image via a pre-trained model, to obtain pattern information such as a pattern type of a pattern, an image composition manner of the pattern, and a color of the pattern in the to-be-processed image. Then, the mobile phone may process the obtained pattern information according to a specific rule, to obtain the wallpaper description information that matches the to-be-processed image, for example, a pattern parameter, a layer level, a color parameter, and an animation effect parameter of a drawing pattern described below.

For example, the image composition manner may include but is not limited to at least one of the following: planar symmetric image composition, stacked image composition, translational image composition, stacked image composition, rotational image composition, kaleidoscope image composition, or the like.

For example, the pattern type may be flexibly configured based on a requirement, so that the model has a function of identifying a corresponding pattern type. For example, the pattern type may be a stripe, a grid, or a spot. Alternatively, for example, the pattern type may be a circle, a square, or a triangle. This is not limited in this application.

In a possible implementation, the mobile phone may further match the to-be-processed image with a plurality of sets of preset wallpaper description information in the manner in Example 3, to determine a set of wallpaper description information that matches the to-be-processed image.

For example, the wallpaper description information may include a description parameter of the live wallpaper.

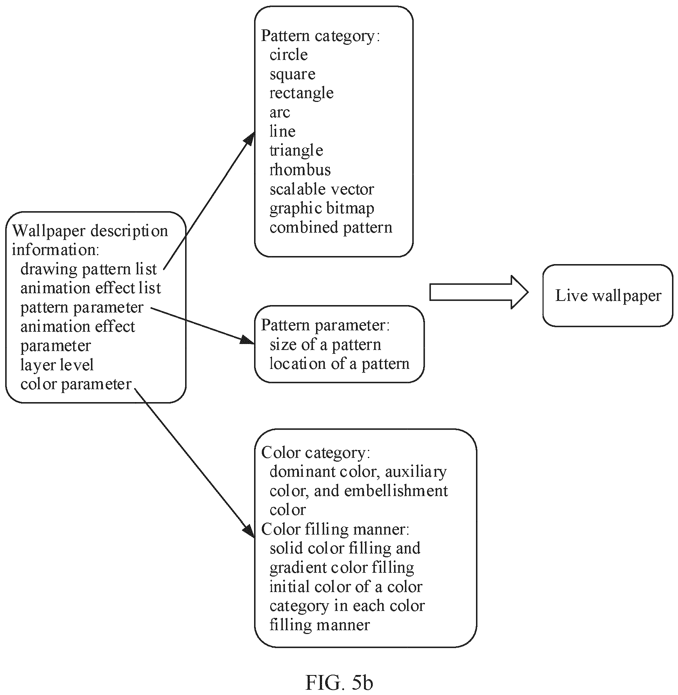

For example, as shown in FIG. 5b, a drawing pattern list may be configured in the wallpaper description information.

For example, the drawing pattern list may be all drawing patterns included in the live wallpaper corresponding to the wallpaper description information, where there is at least one drawing pattern.

For example, the wallpaper description information may include a description parameter of each drawing pattern included in the live wallpaper, for example, a description parameter of each drawing pattern in the foregoing drawing pattern list.

For example, the pattern is a minimum unit for generating a live wallpaper.

For example, as shown in FIG. 5b, the description parameter of the drawing pattern may include at least one of a pattern parameter, an animation effect parameter, a layer level, and a color parameter. For example, all animation effect corresponding to the drawing patterns in the drawing pattern list may be described in an animation effect list.

For example, as shown in FIG. 5b, categories of drawing patterns in the wallpaper description information may include but are not limited to:
a geometric pattern indicating a simple geometric shape like a circle, a square, a rectangle, an arc, a line, a triangle, and a rhombus;
a complex pattern: a scalable vector graphic and a bitmap; and
a combined pattern, where the combined pattern may be a pattern obtained by combining at least one geometric pattern and/or at least one complex pattern.

For example, the combined pattern is defined in the wallpaper description information, and the foregoing description parameter (for example, the animation effect parameter) may be set for the combined pattern, to facilitate management of the description parameter of the pattern, for example, management of the animation effect.

In this embodiment of this application, the wallpaper description information may include description parameters of one or more patterns. For example, a plurality of patterns (same or different) may be combined to form a logical pattern (for example, the combined pattern), to facilitate management of the description parameters of the patterns.

For example, when the drawing pattern (for example, the pattern corresponding to the drawing pattern list) included in the live wallpaper is obtained based on the to-be-processed image, the drawing pattern may be obtained in any manner of obtaining the drawing pattern that matches the image in the conventional technology or in the future.

For example, the mobile phone may determine a corresponding pattern type (for example, a stripe or a grid) based on a pattern in the to-be-processed image, and then match the identified pattern type (a texture or a line) with a pattern category of a pattern in Gallery. A corresponding pattern category is configured for each pattern in Gallery. In this way, patterns that are in Gallery and whose pattern categories match corresponding pattern types may be determined, and these matched patterns (or these patterns are further processed) are used as the drawing patterns in the wallpaper description information.

For another example, the mobile phone may identify a pattern in the to-be-processed image, perform image composition on the identified pattern in a specific image composition manner, and use a drawing pattern obtained after image composition as the drawing pattern in the wallpaper description information.

For example, as shown in FIG. 5b, the pattern parameter of the drawing pattern may include but is not limited to at least one of the following: a size of the pattern, a location of the pattern in the live wallpaper, and the like.

For example, in the wallpaper description information, a pattern size of each drawing pattern is an initial size of the pattern, and a location of the pattern in the live wallpaper is an initial location. When an animation effect parameter is configured for the drawing pattern, the size and the location of the pattern may change.

For example, a pattern parameter of a rectangle may include but is not limited to a location of the rectangle, a width of the rectangle, a height of the rectangle, and a width of an outline. Pattern parameters of other categories of patterns are similar. Details are not described herein.

For example, the drawing pattern may further have a layer level. For example, different patterns may present stacked image composition in the live wallpaper. For example, a triangle pattern is displayed on top of a circle pattern in an overlay manner. In this case, when describing a stacking relationship between different patterns, the mobile phone may implement the stacking relationship based on layer levels of the patterns, where a pattern with a higher layer level may cover a pattern with a lower layer level. In addition, a plurality of patterns in which stacked image composition exists are stacked in descending order of layer levels.

For example, a layer level in the wallpaper description information is an initial layer level of a corresponding drawing pattern. If the drawing pattern has animation effect, the layer level may change based on the animation effect. This is not limited in this application.

For example, layer levels of the patterns in the combined pattern may be the same or different. This is not limited herein.

For example, the color parameter of the drawing pattern shown in FIG. 5b may be a color description parameter of the pattern.

For example, a color category used in at least one pattern area in the drawing pattern may be defined in a color parameter of a drawing pattern, where the pattern area may be a part of the drawing pattern, or may be an entire area of the drawing pattern.

For example, as shown in FIG. 5b, the color parameter may include a color category, and the color category may include at least one of a dominant color, an auxiliary color, and an embellishment color.

For example, as shown in FIG. 5b, a color filling manner of each color category may include solid color filling and gradient color filling.

For example, as shown in FIG. 5b, an initial color (for example, a red-green-blue (RGB) value) of a color category in each color filling manner is further defined in the color parameter.

For example, when generating the live wallpaper based on the wallpaper description information, the mobile phone may fill a color in a pattern based on a color category that is of each pattern area and that is defined in a color parameter of the pattern, for example, the color category is the dominant color, the auxiliary color, or the embellishment color, and whether a color filling manner used when a corresponding color category is used is the solid color filling or the gradient color filling, to implement color filling of the pattern. For example, when different color categories (for example, the dominant color, the auxiliary color, and the embellishment color) are defined in the wallpaper description information and correspond to different color filling manners (for example, the solid color filling manner or the gradient color filling manner), the color category corresponds to a specific color (which may be a color value of a single color, or may be color values of a plurality of colors).

For example, in a flower pattern, that a petal uses a gradient dominant color, and that a stamen uses a solid auxiliary color may be defined in a color parameter of the pattern.

For another example, in a rectangular pattern, that a border of the rectangle uses a solid auxiliary color, and that an internal color (for example, a filling color) of the rectangle is a solid dominant color may be defined in a color parameter of the pattern.

Regardless of a solid dominant color, a gradient dominant color, or an auxiliary color of various filling manners, a specific color value is defined in the wallpaper description information based on a color in the to-be-processed image. For example, if a color value of a solid dominant color is a color value of red, when filling the pattern with a color, the electronic device only needs to fill the pattern with a color based on a color value corresponding to a corresponding color category.

For example, color parameters of the patterns in the combined pattern may be the same or different. This is not limited herein.

In a possible implementation, the color parameter may include a pattern color in the to-be-processed image or an optimized color obtained after processing is performed on the pattern color, and the processing may include but is not limited to at least one of the following: combining similar pattern colors, and adjusting a color value of the pattern color, where the color value includes hue, saturation, brightness, and the like. A specific implementation of determining, based on a pattern color in the to-be-processed image, a color parameter corresponding to at least one pattern in the wallpaper description information is not limited in this application.

For example, as shown in FIG. 5b, an animation effect list may be further configured in the wallpaper description information.

For example, the animation effect list is a list of all animation effect of drawing patterns included in the live wallpaper corresponding to the wallpaper description information. For example, an animation effect ID list, where the animation effect ID list may include an ID of at least one kind of animation effect. For example, IDs of a same kind of animation effect (for example, a rotation animation effect) are different when animation effect parameters are different. For example, IDs of animation effect of a same type (for example, all animation effect is rotation animation effect) may be different when animation effect parameters are different.

For example, as shown in FIG. 5b, at least one drawing pattern in the drawing pattern list may have an animation effect parameter, and an animation effect ID of the animation effect parameter of the at least one drawing pattern may be recorded in the animation effect list. In this way, when the electronic device displays the live wallpaper based on the wallpaper description information, the at least one drawing pattern may be displayed, and the drawing pattern may move according to a motion rule defined by the animation effect parameter of the drawing pattern. The drawing pattern may be a single pattern or may be a combined pattern.

For example, the animation effect parameter is a description parameter of a motion rule acting on a single pattern or a combined pattern.

For example, an animation effect parameter of a single pattern or a group of patterns may include but is not limited to at least one of the following parameters:

### 1. Animation effect type

For example, there may be one or more animation effect types of a single pattern or a group of patterns. This is not limited herein.

For example, the animation effect type may include but is not limited to zooming, translation, rotation, blurring, color changing, transparency changing, vector transformation, and the like. It should be understood that an animation effect type is not limited in this application.

For example, three types of animation effect: translation, zooming, and rotation may respectively change parameter values of three candidate parameters: a location, a size ratio, and an angle of a pattern.

For example, the blurring animation effect may change a blurring degree of the pattern.

For example, the blurring animation effect may determine a blurring value by using a blurring algorithm like Gaussian blur or motion blur, and perform blurring processing on the pattern based on the blurring value. The blurring value indicates strength of the blurring algorithm, and a process of blurring processing on the pattern may be animation effect.

For example, the color changing animation effect refers to a gradual change process of a color of the pattern.

For example, the transparency changing animation effect refers to a gradual change process of transparency of the pattern.

For example, the vector transformation animation effect refers to a process in which one of two vector graphs is transformed into the other vector graph in an interpolation manner. For example, in the vector transformation animation effect, a circle may gradually transform into a square shape.

### 2. Information with which a parameter value of a candidate parameter of a pattern changed by animation effect may change

For example, the information may include but is not limited to one of the following: time, an interaction manner of the electronic device, application data, and the like.

For example, candidate parameters that are of a pattern and that can be changed by types of special effect of zooming, translation, rotation, blurring, color changing, transparency changing, and vector transformation are sequentially: a size ratio, a location, an angle, a blurring degree, a color parameter, transparency, and interpolation.

For example, each type of animation effect in the foregoing examples may change a parameter value of a candidate parameter of a pattern. However, a quantity of candidate parameters corresponding to each type of animation effect is not limited in this application, and may be one or more. In other words, same animation effect may change one or more candidate parameters of the pattern.

For example, that a parameter value change of which candidate parameter or candidate parameters of a pattern is related to time, and/or that a parameter value change of which candidate parameter or candidate parameters is related to an interaction manner of an electronic device, and/or that a parameter value change of which candidate parameter or candidate parameters is related to application data of the electronic device may be defined in the animation effect parameter.

For example, the zooming in/out animation effect may change a size ratio of a pattern. An animation effect type of a circular pattern may be defined as zooming in/out animation effect in an animation effect parameter of the circular pattern, and a size ratio parameter of the circular pattern changed by the zooming in/out animation effect is related to time. In this way, in a displayed live wallpaper, the size ratio of the circular pattern may change with time.

For example, the translation animation effect may change a location of a pattern in a live wallpaper. An animation effect type of a line pattern may be defined as the translation animation effect in an animation effect parameter of the line pattern, and the location that is of the line pattern in the live wallpaper and that is changed by the translation animation effect is related to the interaction manner of the electronic device and the application data.

For example, the color changing animation effect may change a display color of a pattern in a live wallpaper. That an animation effect type of the circular pattern includes color changing animation effect, and that the display color that is of the circular pattern in the live wallpaper and that is changed by the color changing animation effect is related to the application data of the electronic device may be defined in an animation effect parameter of a circular pattern.

It should be noted that a specific interaction manner and specific application data may not be specified for the interaction manner and the application data that are defined in the animation effect parameter and that can change parameter values of one or more candidate parameters.

For example, when adjusting the wallpaper description information based on the interaction manner and the application data of this device, the electronic device may associate a specified interaction manner with a candidate parameter of a changed pattern by corresponding animation effect; and/or associate specified application data with a candidate parameter of a changed pattern by corresponding animation effect. In this way, the interaction manner and/or the application data of the electronic device may be associated with the animation effect in the live wallpaper, so that after the electronic device receives a corresponding interaction manner triggered by the user and/or detects corresponding application data, triggering of the interaction manner and/or a change of the application data may be reflected in an animation effect manner in the live wallpaper.

For example, the location of the line pattern in the live wallpaper is associated with motion data of the electronic device. In this way, when a quantity of movement steps of the user changes, a display location of the line pattern in the live wallpaper may be changed based on an animation effect parameter of the translation animation effect, so that the display location of the line pattern may dynamically change with a change of the quantity of movement steps.

For example, the location of the line pattern in the live wallpaper is associated with a folding operation of the electronic device. In this way, when the user folds the mobile phone, the mobile phone may determine, based on data detected by a sensor, that the folding operation of the user is received, so that the mobile phone change, in the live wallpaper, the display location of the line pattern in the wallpaper based on the animation effect parameter of the translation animation effect, and the display location of the line pattern may dynamically change with the folding operation.

In a possible implementation, parameter values of candidate parameters of patterns changed by some types of animation effect (for example, zooming, translation, rotation, blurring, and transparency changing) are relative values, where the relative value is a relative value relative to an initial parameter value of the candidate parameter of the pattern. In a possible implementation, parameter values of candidate parameters of patterns changed by some types of animation effect (for example, vector transformation and color changing) are absolute values.

For example, a value of the animation effect parameter may ensure that a pattern in the wallpaper has consistent effect on devices with different screen sizes. For example, a translation distance is a ratio of an original size of a relative pattern, and a horizontal translation distance is 50%, indicating that the horizontal translation distance is 50% of a width of the pattern.

Similarly, a parameter of the blurring animation effect, for example, a blurring radius, is also a ratio of an original image size. Parameters of the vector transformation and the color changing are consistent on different devices. Therefore, relative values are not required for description.

For example, candidate parameters that are of a pattern and that can be changed by types of special effect of zooming, translation, rotation, blurring, color changing, transparency changing, and vector transformation are sequentially: a size ratio, a location, an angle, a blurring degree, a color parameter, transparency, and interpolation.

For example, the translation special effect may change a location of a pattern, and a change value is a location change value relative to the pattern.

For example, if the translation special effect may enable the circular pattern to be translated by 50%, a translation amount of the circular pattern performed by the electronic device is 50% of a quantity of horizontally arranged pixels occupied by the circular pattern.

For example, the live wallpaper corresponding to the wallpaper description information is separately displayed on displays of the mobile phone and a watch.

Because screen resolutions of the mobile phone and the watch are different, when the circular pattern is displayed on the mobile phone, the circular pattern may occupy 1000 pixels arranged horizontally. In this case, translation by 50% may enable the circular pattern to be translated by 500 pixels on the display of the mobile phone. When the circular pattern is displayed on a watch face of the watch, the circular pattern may occupy 100 pixels arranged horizontally. In this case, translation by 50% may enable the circular pattern to be translated by 50 pixels on the watch face. In this way, the translation animation effect is implemented on the circular pattern in the live wallpaper. In this way, a change amount of a parameter value of a candidate parameter changed by animation effect is set to a value relative to a pattern, so that same animation effect can implement image transformation effect in equal ratio on electronic devices of different sizes.

For another example, the rotation special effect may enable the line to rotate clockwise by 30 degrees. In this case, the 30 degrees is also a relative value relative to an angle of the pattern. For example, an initial angle of the line pattern is 0 degrees, that is, the line pattern is displayed horizontally. After the line is rotated clockwise by 30 degrees, a display angle of the line pattern is 30 degrees. For another example, if the initial angle of the line pattern is 30 degrees, after the line pattern is rotated clockwise by 30 degrees, the display angle of the line pattern is 60 degrees.

### 3. Animation effect duration

For example, the animation effect duration may be total duration corresponding to an animation effect type applied to a pattern (a single pattern or a group of patterns).

For example, that an animation effect type of the circular pattern is zooming, and that a size ratio parameter that is of the circular pattern and that is changed by the zooming in/out animation effect is related to time may be defined in the animation effect parameter of the circular pattern. In this case, that animation effect duration corresponding to a size ratio parameter changed by the zooming in/out animation effect in the circular pattern is 5 seconds (specific duration may be flexibly configured based on a requirement, and is not limited herein) may be further defined in the wallpaper description information. In this case, the zooming in/out animation effect is implemented on the size ratio of the circular pattern within 5 seconds.

### 4. Animation effect sequence

For example, the animation effect sequence may include a time-related animation effect sequence.

For example, a time-related animation effect sequence may describe a pattern change degree at specific time.

For example, if zooming in/out animation effect of a pattern is used to change a size ratio of the pattern, and a change of the size ratio is related to time, an animation effect parameter of the zooming in/out animation effect of the pattern may further include an animation effect sequence.

For example, the animation effect sequence may include a mapping relationship between a time progress and a zooming amount of a size ratio.

For example, the animation effect sequence includes 0%-1, 50%-1.5, and 100%-1. When the zooming in/out animation effect of the pattern is displayed based on the animation effect sequence, a zooming value of the pattern may be 1 times when the zooming in/out animation effect of the pattern is started (corresponding to a 0% time progress), the zooming value of the pattern is 1.5 times when the zooming in/out animation effect of the pattern is played to 50%, and the zooming value of the pattern is 1 times when the zooming in/out animation effect of the pattern is completely played. In this way, the zooming in/out animation effect describes a dynamic process in which the pattern is zoomed in by 1.5 times from an original size and then zoomed out to the original size.

For example, if animation effect duration of the zooming in/out animation effect of the pattern is 4s, from 0^{th}s to 2^{nd}s, the pattern is converted from an original size to be zoomed in by 1.5 times for display. From 2^{th}s to 4^{th}s, the size of the pattern is converted from a 1.5 times zoomed-in ratio to the original size for display.

It should be understood that the time progress and the change amount (for example, the zooming amount of the size ratio) of the candidate parameter in the foregoing animation effect sequence are not limited to the foregoing examples, and may be specifically flexibly defined based on a requirement.

### 5. Animation effect curve

For example, the animation effect curve indicates a change of a play speed, at each time point, of an animation that controls corresponding animation effect within animation effect duration.

For example, the animation effect curve may be an acceleration curve, and the acceleration curve may simulate a process in which a speed continuously increases in a process in which a small ball falls.

In a possible implementation, which pattern or patterns in the drawing pattern list is/are a background element of the live wallpaper, and/or which pattern or patterns in the drawing pattern list is/are a primary element of the live wallpaper, and/or which pattern or patterns in the drawing pattern list is/are a secondary element of the live wallpaper may be further defined in the wallpaper description information.

For example, the background pattern, the primary element, and the secondary element each may include at least one pattern, and patterns included in the background pattern, the primary element, and the secondary element each may be a single pattern and/or a combined pattern.

For example, the patterns included in the background pattern, the primary element, and the secondary element are different.

For example, patterns in the wallpaper description information are logically divided into the primary element, and/or the secondary element, and/or the background element, so that a color parameter can be easily set for the pattern. For example, the primary element may be a pattern that appears frequently and occupies a large display area in the live wallpaper, in this case, a color parameter of a pattern corresponding to the primary element may be set to the dominant color. Similarly, a color parameter of a pattern corresponding to the secondary element is set to the embellishment color, and a color parameter of a pattern corresponding to the background element is set to the auxiliary color.

For example, when the wallpaper description information is generated, an animation effect parameter may also be set for the primary element, and/or the secondary element, and/or the background element.

In embodiments of this application, the electronic device may set the color parameter for the pattern based on an element category (the primary element, the secondary element, or the background element) to which the pattern belongs, so that the wallpaper description information can be quickly generated.

For example, for the combined pattern mentioned in FIG. 5b, in a possible implementation, the mobile phone may define an array structure (for example, an annular array, a rectangular array, or a hexagonal array, which is not limited herein) of an internal pattern of the combined pattern, to define the combined pattern.

It should be understood that the array structure in this application is not limited to an equidistant array. For example, distances between constituent patterns in an annular array are not limited to equidistant, so that the annular array is not limited to a circular equidistant array, but may be an elliptical array, an irregular annular array, or another non-equidistant array. Similarly, for another array structure, the array structure is not limited to a regular equidistant array or an irregular non-equidistant array.

The following describes wallpaper description information of a combined pattern arranged in an array structure with reference to different examples.

### Example 6

In a possible implementation, when the combined pattern is defined by using the array structure, the combined pattern may include only one type of patterns (for example, only one type of hexagons of a same size). A pattern parameter (for example, a size and a location), a layer level, a color parameter, and an animation effect parameter of a single pattern in the combined pattern, and an array structure of the single pattern may be defined in the wallpaper description information, to generate the wallpaper description information of the combined pattern.

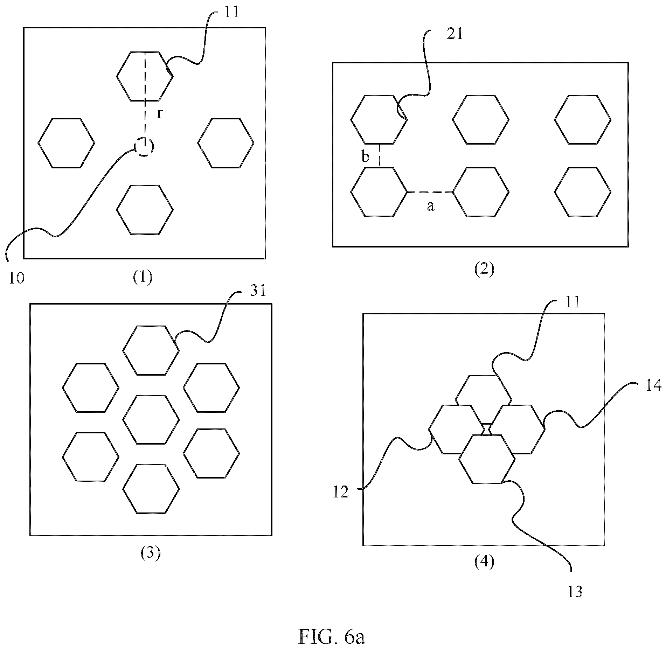

For example, (1) in FIG. 6a, (2) in FIG. 6a, and (3) in FIG. 6a respectively show three combined patterns including hexagons 11 by using different array structures. Each combined pattern in FIG. 6a includes only one type of patterns, that is, hexagons of a same size.

For example, in the combined pattern shown in (1) in FIG. 6a, a pattern parameter, a layer level, a color parameter, and an animation effect parameter (for example, an animation effect type is zooming in/out animation effect) of the hexagon 11 are defined, and an array structure of the hexagon 11 is defined as an annular array. In this case, a generated live wallpaper may include a frame of image including the combined pattern shown in (1) in FIG. 6a.

For example, (1) in FIG. 6a shows an example of four hexagons forming an annular array. In specific application, a quantity of hexagons in the annular array is not limited, and may be flexibly adjusted based on a requirement and a device parameter.

In a possible implementation, in the example in (1) in FIG. 6a, layer levels of the four hexagons in the annular array are the same.

In another implementation, in the combined pattern, layer levels of hexagons that belong to different locations in a same array may also be different. For example, in the combined pattern in the annular array shown in (4) in FIG. 6a, a hexagon 13 has a highest layer level, and covers a part of an area of a hexagon 12 and a part of an area of a hexagon 14. Layer levels of the hexagon 12 and the hexagon 14 are the same, and are both higher than a layer level of the hexagon 11, so that the hexagon 12 and the hexagon 14 cover a part of an area of the hexagon 11.

In a possible implementation, in the example in (1) in FIG. 6a, color parameters of the four hexagons in the annular array are the same. In another possible implementation, color parameters of different hexagons in the annular array may also be different, for example, gradient colors are presented based on the array. Whether color parameters of patterns that belong to different locations in a same array in the combined pattern are the same is not limited in this application.

In a possible implementation, in the example in (1) in FIG. 6a, an animation effect parameter (for example, an animation effect type is zooming in/out animation effect) of the hexagon 11 in the combined pattern may be defined in the wallpaper description information. In this case, the mobile phone may automatically define, for another hexagon in the combined pattern, an animation effect parameter that is the same as that of the hexagon 11, so that when a live wallpaper is displayed, in a case in which the hexagon 11 changes based on the animation effect parameter of the zooming in/out animation effect, the another hexagon also changes in a same size ratio based on the animation effect parameter of the zooming in/out animation effect, and the array structure corresponding to the combined pattern is still maintained as the annular array.

For example, in the combined pattern shown in (2) in FIG. 6a, a pattern parameter, a layer level, a color parameter, and an animation effect parameter (for example, an animation effect type is translation animation effect) of the hexagon 21 are defined, and an array structure of the hexagon 21 is defined as a rectangular array. In this case, a generated live wallpaper may include a frame of image including the combined pattern shown in (2) in FIG. 6a.

For example, in the combined pattern shown in (3) in FIG. 6a, a pattern parameter, a layer level, a color parameter, and an animation effect parameter (for example, an animation effect type is rotation animation effect) of the hexagon 31 are defined, and an array structure of the hexagon 31 is defined as a hexagonal array. In this case, a generated live wallpaper may include a frame of image including the combined pattern shown in (3) in FIG. 6a.

For the combined patterns of the corresponding array structures shown in (2) in FIG. 6a and (3) in FIG. 6a, definition principles of pattern parameters, layer levels, color parameters, and animation effect parameters of the internal combined patterns are similar to descriptions and principles of the related implementation of the hexagon 11. Details are not described herein.

### Example 7

In a possible implementation, when the combined pattern is defined by using the array structure, the combined pattern may include a plurality of patterns. The plurality of patterns may be different patterns, for example, a triangle and a hexagon.

For example, in this implementation, an array structure of the plurality of patterns in the combined pattern and a relative location relationship between different patterns in the array structure may be defined in the wallpaper description information, to determine a layout of the plurality of patterns in the array structure.

For example, in this implementation, for the plurality of patterns (for example, the triangle and the hexagon) in the combined pattern, at least one parameter of a pattern parameter (for example, a size and a location), a layer level, a color parameter, and an animation effect parameter of each pattern may be separately defined in the wallpaper description information.

For example, layer levels of different patterns in the plurality of patterns (for example, the triangle and the hexagon) in the combined pattern may be the same or different, color parameters may be the same or different, and animation effect parameters may be the same or different (for example, the triangle has the rotation animation effect).

For example, the animation effect parameter may be defined in the wallpaper description information for the combined pattern, so that animation effect of each pattern in the combined pattern includes animation effect corresponding to the animation effect parameter. Optionally, at least one pattern in the combined pattern may have the animation effect of the combined pattern, and an animation effect parameter applied to the at least one pattern may be further defined.

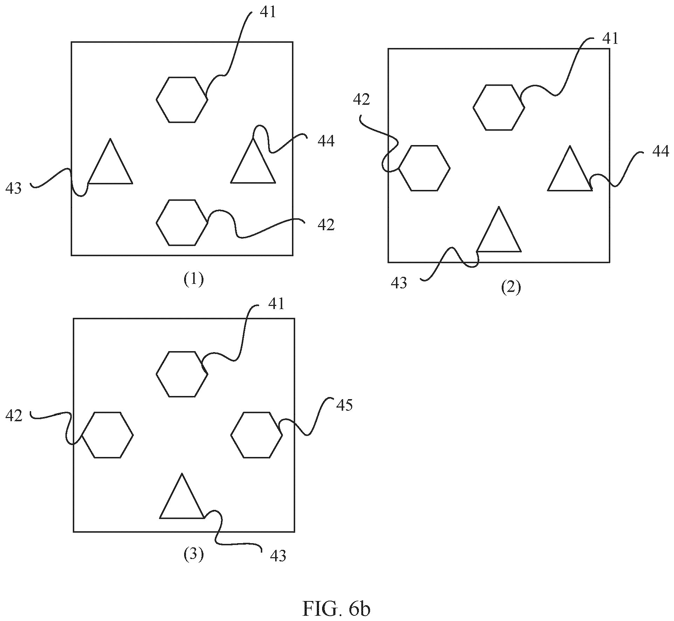

For example, (1) in FIG. 6b shows an example of a combined pattern arranged in an annular array. The combined pattern includes a plurality of patterns, which are hexagons and triangles. There are two hexagons, namely, a hexagon 41 and a hexagon 42, and two triangles, namely, a triangle 43 and a triangle 44.

For example, in the annular array shown in (1) in FIG. 6b, distances between different patterns are the same, and the patterns are symmetrically disposed.

For example, in (1) in FIG. 6b, the hexagon 41 and the hexagon 42 that are of a same pattern and size are symmetrically arranged, and the triangle 43 and the triangle 44 that are of a same pattern and size are symmetrically arranged.

However, an arrangement relationship between different patterns is not limited in this application. For example, the arrangement relationship is not limited to the symmetric arrangement shown in (1) in FIG. 6b, provided that the arrangement relationship complies with the annular array. For example, in (2) in FIG. 6b, the hexagon 41 and the hexagon 42 are arranged adjacent to each other, and the triangle 43 and the triangle 44 are arranged adjacent to each other.

For example, in (1) in FIG. 6b and (2) in FIG. 6b, a plurality of patterns included in the combined pattern arranged in the annular array are hexagons and triangles. A quantity of hexagons is the same as a quantity of triangles.

In an annular array shown in (3) in FIG. 6b, there are three hexagons: a hexagon 41, a hexagon 42, and a hexagon 45, and there is one triangle: a triangle 43.

In the plurality of patterns included in the combined pattern, a quantity of patterns of each type of pattern is not limited in this application.

### Example 8

In a possible implementation, when the combined pattern is defined by using the array structure, the combined pattern may include a plurality of patterns. The plurality of patterns may be different patterns, for example, a triangle and a hexagon.

For example, in this implementation, in the wallpaper description information, the plurality of patterns in the combined pattern may be divided into at least two groups, and each group includes same patterns of a same shape and size. For example, one group includes triangles of a same size, and the other group includes hexagons of a same size.

For example, a description parameter of each group of patterns in the combined pattern may be separately defined in the wallpaper description information. For example, if a pattern layout of each group of patterns complies with a specific array structure, each group of patterns may be defined based on a corresponding array structure, for example, in a manner of Example 7, to generate the description parameter of each group of patterns in the combined pattern. A principle is similar, and details are not described herein. The description parameter may include at least one of a pattern parameter, an animation effect parameter, a layer level, and a color parameter.

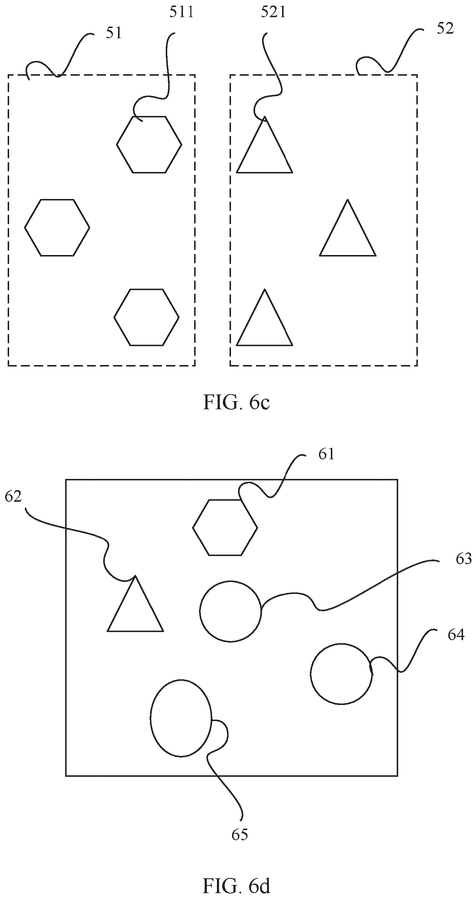

For example, FIG. 6c is a diagram of an example of a combined pattern. The combined pattern includes two types of patterns: hexagons and triangles, and an array structure of the combined pattern is a hexagonal array. As shown in FIG. 6c, the combined pattern may include a pattern 51 (a combined pattern) and a pattern 52 (a combined pattern) shown in dashed boxes. In this case, the mobile phone may define the pattern 51 by using a triangular array, and define the pattern 52 by using a triangular array in the manner of Example 7.

For example, in a description parameter of the pattern 51 shown in FIG. 6c, an array structure of hexagons 511 may be defined as the triangular array, and a pattern parameter, a layer level, a color parameter, and an animation effect parameter of the hexagon 511 are separately defined.

For example, in a description parameter of the pattern 52 shown in FIG. 6c, an array structure of triangles 521 may be defined as the triangular array, and a pattern parameter, a layer level, a color parameter, and an animation effect parameter of the triangle 521 are separately defined.

For example, a description parameter of an overall combined pattern shown in FIG. 6c may include not only the description parameter of the pattern 51 and the description parameter of the pattern 52, but also information about an array relationship or a layout relationship between the pattern 51 and the pattern 52, so that an array structure corresponding to the overall combined pattern is a hexagonal array.

In a possible implementation, when the combined pattern is defined by using the array structure, the combined pattern may alternatively include one kind of patterns of different sizes, for example, triangles of different sizes. An implementation principle may be combined with any one of Example 6 to Example 8.

In the foregoing Example 6 to Example 8, implementations of various examples may be combined with each other to form a new implementation. In addition, an implementation in which the combined pattern is defined by using the array structure is not limited to the foregoing examples. Details are not described herein.

In the related implementations of Example 6 to Example 8, when there is a specific rule for an arrangement relationship between the patterns in the combined pattern, the electronic device in this application may define an array structure of a single pattern or a plurality of patterns for the combined pattern, to define an arrangement relationship between the patterns in the combined pattern, so that repeated setting of repetitive description parameters of a same pattern or different patterns is avoided, generation of wallpaper description information is accelerated, and display of a live wallpaper is accelerated.

For example, as shown above, animation effect of the pattern may change a parameter value of at least one candidate parameter of the pattern. For example, for a combined pattern (for example, any combined pattern in Example 6 to Example 8) corresponding to an array structure, it may be defined in an animation effect parameter of the combined pattern that at least one candidate parameter, for example, a location, a size, an angle, or a layer level of the pattern is changed by changing an array parameter, for example, an array distance and/or an array center of the array structure, so that in a displayed live wallpaper, complex animation effect can be displayed.

For example, still refer to (1) in FIG. 6a. In (1) in FIG. 6a, four hexagons form the annular array. In an animation effect parameter of the combined pattern corresponding to a static image shown in (1) in FIG. 6a, the mobile phone may use an array distance of the annular array as an array parameter that is of the combined pattern and that is changed by the animation effect of the combined pattern. The array parameter is similar to the candidate parameter, and the array parameter (herein, the array distance) of the combined pattern may also change with time, an interaction manner, or application data, to generate complex animation effect.

It should be understood that, in a process in which the array distance changes, an array relationship between patterns in the combined pattern is still the annular array. In other words, the animation effect of the combined pattern does not change the array relationship of the combined pattern.

In the animation effect parameter of the combined pattern corresponding to the static image shown in (1) in FIG. 6a, the mobile phone may use an array center (for example, a dashed circle 10) of the annular array as an array parameter that is of the combined pattern and that is changed by the animation effect of the combined pattern, so that the array center of the combined pattern can change with time, an interaction manner, or application data, to generate complex animation effect. For example, in the animation effect parameter of the combined pattern corresponding to the static image shown in (1) in FIG. 6a, if an animation effect type in the animation effect parameter is rotation animation effect, the mobile phone may move the dashed circle 10 of the combined pattern to change a location of the dashed circle 10, to drive the four hexagons of the annular array to rotate to an annular location in which the dashed circle 10 obtained after the location change is used as the array center.

In a possible implementation, when the combined pattern is defined by using the array structure, a ratio relationship between the array parameter and the candidate parameter of the combined pattern may be further defined in the wallpaper description information. When a parameter value of the candidate parameter changes in the combined pattern based on a corresponding animation effect parameter, a parameter value of the array parameter may also change, or when a parameter value of the array parameter of the combined pattern changes, a parameter value of the candidate parameter changed by the animation effect parameter of the combined pattern may also change. The ratio relationship between the array parameter and the candidate parameter remains unchanged, so that the array structure of the combined pattern remains unchanged.

For example, the array parameter of the annular array may include but is not limited to an array center and an array radius (for example, a radius r shown in (1) in FIG. 6a).

For example, the array parameter of the rectangular array may include but is not limited to a horizontal spacing (for example, a spacing a shown in (2) in FIG. 6a) of the rectangle and a vertical spacing (for example, a spacing b shown in (2) in FIG. 6a) of the rectangle.

It should be understood that, when types of array structures are different, array parameters may be different. This is not limited in this application.

In implementations of this application, when the combined pattern is defined by using the array structure, the parameter that is in the wallpaper description information and that is used to define the array structure may belong to the array parameter. For example, the array parameter may not only include the array parameters listed above, but also include an array type, a quantity of patterns, and the like. For example, the ratio relationship between the array parameter and the candidate parameter of the combined pattern may also belong to a parameter of the array structure.

Still refer to the static image of the combined pattern defined by using the annular array shown in (1) in FIG. 6a. For example, if an animation effect type of the combined pattern is zooming in/out animation effect, the zooming in/out animation effect may change a size ratio of the four hexagons in the combined pattern. A zooming multiple is used as an example of a change amount of the size ratio. For example, a ratio relationship between a zooming multiple of the zooming in/out animation effect and a change amount of an array radius of the annular array may be defined in the wallpaper description information of the combined pattern as follows: The hexagon is zoomed in by two times, and the array radius is zoomed out by half.

It should be understood that a change of the array parameter in the foregoing ratio relationship may be a relative value or an absolute value, and may be specifically flexibly determined based on a scenario. This is not limited herein.

In this way, in a case in which an image ratio of the combined pattern changes, the array radius of the combined pattern also changes, to ensure that the animation effect does not change the array structure of the combined pattern, and when a live wallpaper of the combined pattern is displayed on screens of different sizes, effect of displaying the combined pattern in an equal ratio on the screens of different sizes can be achieved.

In a possible implementation, the electronic device in this application may further generate kaleidoscope animation effect based on the description parameter that is of the combined pattern defined by using the array structure and that is in the wallpaper description information.

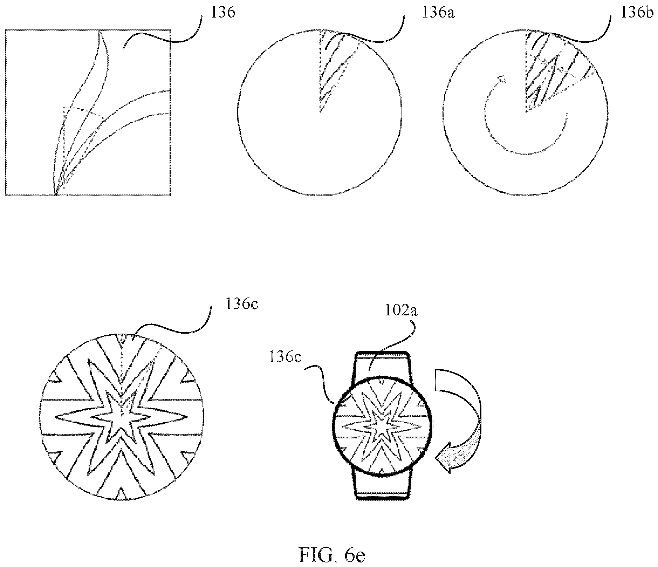

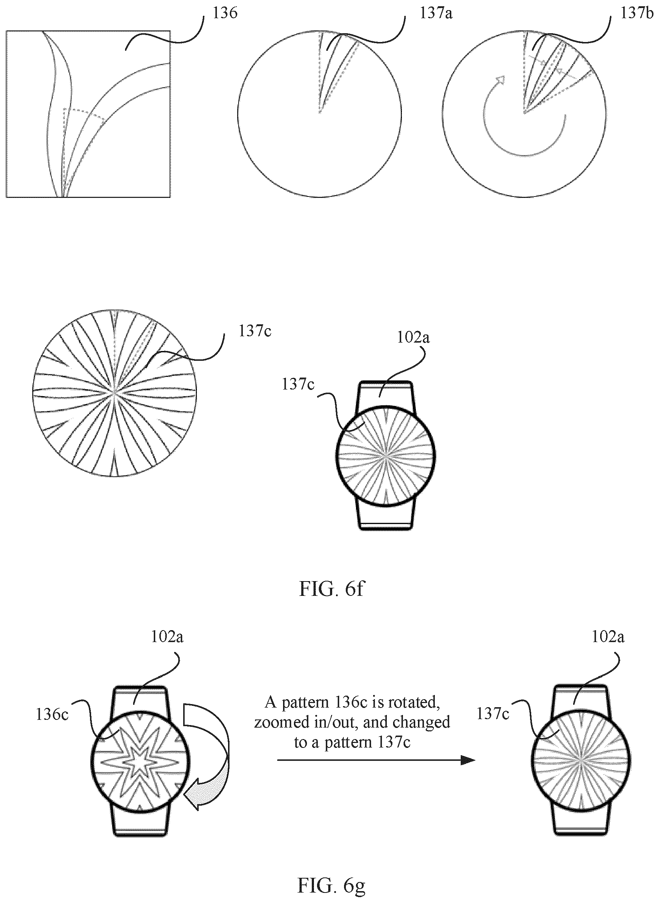

For example, the kaleidoscope animation effect is applied to the smartwatch 102a shown in FIG. 3A and FIG. 3B. Refer to FIG. 6e and FIG. 6f.

For example, as shown in FIG. 6e, a pattern 136 is a pattern identified by the mobile phone (for example, the mobile phone 101 shown in FIG. 3A, FIG. 3B, FIG. 4a, and FIG. 4b) from a to-be-processed image, and the pattern 136 is a pattern including lines. For the pattern 136, the mobile phone may capture a pattern 136a from the pattern 136 in a sector manner, and process the pattern 136a. For example, the mobile phone may generate a mirror image for the pattern 136a, and connect the pattern 136a to the mirror image of the pattern 136a, to obtain a pattern 136b.

For example, the mobile phone may define a combined pattern based on the pattern 136b. For example, a pattern 136c in FIG. 6e is a frame of static image of the combined pattern.

For example, the mobile phone may define a description parameter (for example, a pattern parameter, a color parameter, and an animation effect parameter) for the pattern 136b shown in FIG. 6e, and define an array structure of the pattern 136b as a circular array, to generate wallpaper description information of the combined pattern (for example, the pattern 136c). For example, an animation effect type of the pattern 136b includes rotation animation effect and zooming in/out animation effect. In this way, the animation effect type of the combined pattern (for example, the pattern 136c) may be the rotation animation effect and the zooming in/out animation effect. A specific implementation process of this example is similar to a principle of the process described in Example 6. Details are not described herein.

For example, the mobile phone sends the wallpaper description information of the combined pattern to the smartwatch 102a, and the smartwatch 102a parses the wallpaper description information, and may rotate, based on the circular array, the pattern 136b shown in FIG. 6e, to form a combined pattern (the pattern 136c herein) that is arranged as a circular array and that is used as a frame of static image of a watch face of the smartwatch 102a. The smartwatch 102a may rotate and zoom in/out the pattern 136c based on an animation effect parameter of the pattern 136b.

For example, the smartwatch 102a may rotate and zoom in/out the pattern 136c based on the animation effect parameter of the pattern 136b in response to receiving an operation of rotating a watch crown by a user in a direction of a thick arrow shown in FIG. 6e, so that a watch face wallpaper of the smartwatch 102a is dynamically rotated and zoomed in/out.

In a possible implementation, the wallpaper description information that is of the combined pattern and that is generated by the mobile phone may further carry a to-be-processed image 136 used to generate the pattern 136b.

In a possible implementation, as shown in FIG. 6f, when the smartwatch 102a parses the wallpaper description information of the combined pattern, the smartwatch 102a may reselect a sector area, for example, a pattern 137a, different from the pattern 136a from the to-be-processed image 136. For example, the smartwatch 102a may also apply a description parameter of the combined pattern generated based on the pattern 136a to the pattern 137a. This is similar to a manner in which the mobile phone processes the pattern 136a. As shown in FIG. 6f, the smartwatch 102a may generate a mirror image for the pattern 137a, and connect the pattern 137a to the mirror image of the pattern 137a, to obtain a pattern 137b. Then, the smartwatch 102a may rotate, based on the circular array, the pattern 137b shown in FIG. 6g, to form a combined pattern (herein, the pattern 137c) that is arranged as a circular array and that is used as a frame of static image of the watch face of the smartwatch 102a.

For example, as shown in FIG. 6g, the smartwatch 102a may display the pattern 136c as the watch face. After the user rotates the watch crown, the pattern 136c displayed by the smartwatch 102a may display rotation and zooming in/out animations. Then, a watch face image of the smartwatch 102a changes to the pattern 137c. Similarly, in a subsequent process, the smartwatch 102a may respond to the operation of rotating the watch crown by the user, so that a wallpaper of the watch face presents the kaleidoscope animation effect. For example, when the operation of rotating the watch crown stops, the kaleidoscope animation effect stops.

For example, for the combined pattern mentioned in FIG. 5b, in another possible implementation, the mobile phone may define the description parameter of the combined pattern in a manner of separately defining a description parameter for each internal pattern of the combined pattern.

For example, the mobile phone may separately define a pattern parameter, a layer level, a color parameter, and an animation effect parameter for each pattern (which may be one pattern or a sub-combined pattern including a plurality of patterns) forming the combined pattern, to generate the description parameter of the combined pattern.

For example, FIG. 6d is a diagram of an example of a static image of a combined pattern in a scenario in which a description parameter of each pattern in the combined pattern is separately defined.

For example, as shown in FIG. 6d, the combined pattern includes a pattern 61, a pattern 52, a pattern 63 and a pattern 64 of an equal size, and a pattern 65. Sizes (also referred to as dimensions), locations, layer levels, and color parameters of the pattern 61 to the pattern 65 are all separately defined. For example, an animation effect parameter may be configured for the combined pattern shown in FIG. 6d, or an animation effect parameter may be separately configured for at least one of the pattern 61 to the pattern 65 in the combined pattern. This is not limited in this application.

For example, in the combined pattern shown in FIG. 6d, there is no rule for an arrangement relationship between patterns in the combined pattern. In this embodiment, in a case in which there is no rule for the arrangement relationship between the patterns in the combined pattern, the electronic device in this application may define description parameters of one or more patterns for the patterns in the combined pattern, to accurately define, in wallpaper description information, the description parameters of the internal patterns forming the combined pattern. In this way, the description information expressed by the combined pattern is accurate, which helps accurately describe a dynamic change of each pattern in a live wallpaper.

In a possible implementation, as shown in FIG. 5b, when the mobile phone determines the animation effect type in the animation effect parameter of each pattern in the drawing pattern list in the wallpaper description information, for an animation effect type of a non-combined pattern (for example, a pattern other than the combined pattern in the pattern category shown in FIG. 5b, also referred to as a separate pattern), the mobile phone may determine an animation effect type of the separate pattern based on a shape structure of the separate pattern by using AI.

For example, if the shape structure of the separate pattern (for example, a wavy line) is in linear arrangement, the mobile phone may configure translation animation effect for the separate pattern.

For another example, if the separate pattern (for example, a pentagon) is a circular pattern, the mobile phone may configure rotation animation effect for the separate pattern.

In a possible implementation, as shown in FIG. 5b, when the mobile phone determines the animation effect type in the animation effect parameter of each pattern in the drawing pattern list in the wallpaper description information, for the animation effect type of the combined pattern, regardless of whether the combined pattern is defined by using the array structure or the description parameter of each pattern is separately defined, the mobile phone may configure the animation effect type for the combined pattern based on a pattern layout of the combined pattern.

For example, if the pattern layout of the combined pattern is a pattern layout of rows or columns, the mobile phone may configure translation animation effect for the combined pattern.

For another example, if the pattern layout of the combined pattern is a ring (not limited to a regular ring) pattern layout, the mobile phone may configure rotation animation effect for the combined pattern.

Certainly, there may be one or more animation effect types corresponding to the separate pattern or the combined pattern. This is not limited in this application.

The foregoing implementations describe in detail the wallpaper description information generated by the mobile phone in S201 shown in FIG. 5a.

Still refer to FIG. 5a. After S201, the mobile phone may perform S202a, S202b, and S203c. An execution sequence of the foregoing three steps is not limited in this application.

S202a: The mobile phone sends the wallpaper description information to the smartwatch.

S202b: The mobile phone sends the wallpaper description information to the tablet computer.

For example, refer to FIG. 5b. The wallpaper description information may be description information (for example, a drawing pattern list, a pattern parameter, and a layer level) of a pattern, description information (for example, a color parameter) of a color of the pattern, and a combination of description information (for example, an animation effect list and an animation effect parameter) of animation effect of the pattern. When different electronic devices apply live wallpapers corresponding to wallpaper description information to screens of the devices for display, the devices may properly adjust any one or more pieces of description information in the wallpaper description information with reference to respective device parameters, to obtain live wallpapers applicable to the devices and display the live wallpapers on screens of corresponding electronic devices.

For example, the device parameter may include but is not limited to at least one of the following: device performance, a device form, an interaction manner, application data, and the like.

As shown above, the device performance may include but is not limited to CPU performance, GPU performance, memory performance, a screen refresh rate, and the like.

For example, the device form may include but is not limited to a device type, a screen size, a display aspect ratio, a screen shape, a screen resolution, and the like.

For example, the interaction manner may include but is not limited to gazing at a screen by a human eye, increasing or decreasing a distance between the human eye and the screen, a folding operation on a foldable screen, an operation of sliding the screen, and the like.

For example, the application data may include but is not limited to: fitness data (for example, data such as a quantity of steps and a heart rate), weather data (for example, a temperature), and the like.

For example, adjustment policies that match the device parameters of the electronic devices may be configured in different electronic devices, and the electronic device may adjust the wallpaper description information based on a corresponding adjustment policy, to obtain the adjusted wallpaper description information that matches the device parameter of the electronic device, and display a corresponding live wallpaper.

In this embodiment, the mobile phone separately sends same wallpaper description information to the smartwatch and the tablet computer, and the smartwatch and the tablet computer separately adjust the received same wallpaper description information with reference to respective device parameters, so that displayed live wallpapers can apply to respective device parameters.

In another embodiment, the mobile phone may also separately generate, based on the device parameter of the smartwatch and the device parameter of the tablet computer, different wallpaper description information applicable to respective devices, send, to the smartwatch, the wallpaper description information applicable to the smartwatch, and send, to the tablet computer, the wallpaper description information applicable to the tablet computer. In this way, the smartwatch and the tablet computer may receive, from the mobile phone side, the wallpaper description information directly applicable to respective device parameters, and may not perform secondary adjustment on the wallpaper description information.

An implementation process of adjusting the wallpaper description information by the mobile phone that generates the wallpaper description information or by the smartwatch or the tablet computer that is configured to display the live wallpaper, to apply to a corresponding device is similar, and details are not described herein. For example, for a principle of adjusting the wallpaper description information by the device, refer to a specific process in this example.

The following separately describes, with reference to the mobile phone, the smartwatch, and the tablet computer, a process in which each device adaptively displays a live wallpaper based on wallpaper description information with reference to a device parameter of the device.

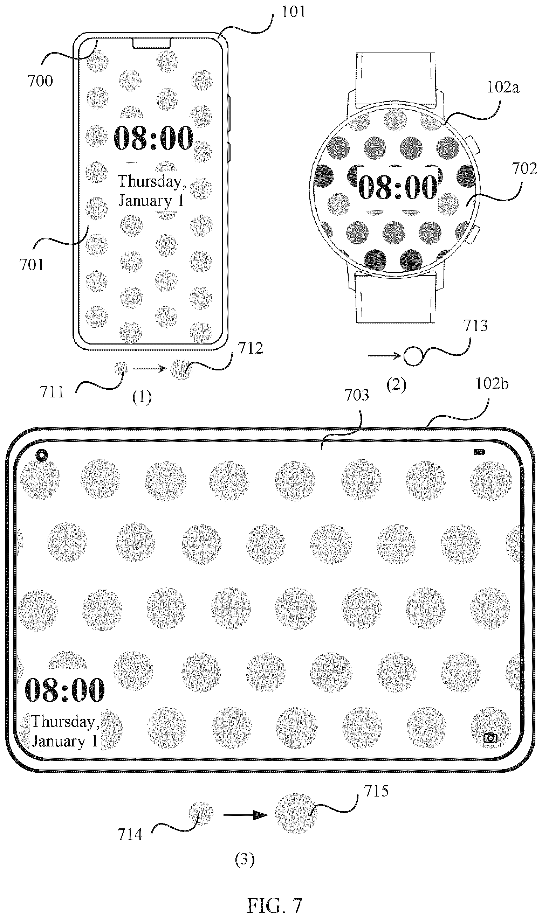

For example, FIG. 7 shows an example in which the mobile phone 101, the smartwatch 102a, and the tablet computer 102b separately display a frame of static image in a live wallpaper on a screen after separately performing adaptive display on a same set of wallpaper description information.

The following describes processes of S203a, S203b, and S203c with reference to FIG. 7.

For example, after S201, the mobile phone may perform S203a.

S203a: The mobile phone displays, based on the wallpaper description information, a live wallpaper that matches a device parameter of the mobile phone.

For example, refer to wallpaper images of devices in FIG. 7. A combined pattern described in a rectangular array structure is defined in the wallpaper description information, and the combined pattern includes only circular patterns of one size. The wallpaper description information includes a pattern parameter like a size and a location of the circular pattern, a color parameter, and an animation effect parameter.

For example, an animation effect type in the animation effect parameter is zooming in/out animation effect, and a plurality of circular patterns that are arranged in a horizontal rectangular array and that have a same size in the combined pattern may be zoomed in/out by using same zooming in/out animation effect.

For example, to improve identifiability of an icon on an interface of the mobile phone, the mobile phone may adjust the color parameter in the wallpaper description information, for example, reduce brightness and saturation. In this way, the color parameter corresponding to the combined pattern may be a color in which brightness and saturation are reduced, to improve identifiability of the icon on the mobile phone interface. A specific color may be flexibly determined based on an application scenario. This is not limited herein.

For example, as shown in FIG. 7, an initial size of the circular pattern is defined in the wallpaper description information of the combined pattern, which may be less than a size of a circular pattern 711 shown in (1) in FIG. 7.

For example, as shown in (1) in FIG. 7, the mobile phone 101 may display the live wallpaper on a home screen 700, and a frame of static image is shown, for example, a wallpaper 701.

For example, to display an applicable live wallpaper on the home screen 700, when adjusting the wallpaper description information, the mobile phone 101 may adjust the wallpaper description information based on a screen size, a display aspect ratio, and a screen shape (which is a vertical rectangle herein) in a device form. For the wallpaper 701 shown in (1) in FIG. 7, a display manner of an array structure of the combined pattern is adjusted to vertical display, so that the wallpaper 701 conforms to a device form of the home screen 700 of the mobile phone 101.

For example, when adjusting the wallpaper description information, the mobile phone 101 may zoom in, based on the screen size, the initial size of the circular pattern to the size of the circular pattern 711 shown in (1) in FIG. 7, so that when the mobile phone 101 displays the live wallpaper, a size of each circular pattern in the wallpaper on the home screen 700 of the mobile phone 101 may be gradually zoomed in from the initial size (which is a size obtained after zooming in) of the pattern 711 shown in (1) in FIG. 7 to a size of a target zoom in/out multiple, for example, a size of the pattern 712, to display the wallpaper 701 shown in (1) in FIG. 7. In a process in which the size dynamically changes, the array structure including the circular patterns remains unchanged, and is still a rectangular array. In this way, in a scenario in which a screen size is large, a pattern in the wallpaper displayed in this application may change from a large initial size, so that a pattern size of the wallpaper can apply to the screen size.

For example, in the wallpaper description information generated by the mobile phone 101, different triggering occasions of animation effect sequences may be set for patterns in the combined pattern, or different animation effect sequences may be set for different patterns in the combined pattern. In this way, although the combined pattern includes only one type of patterns of one size, the animation effect of the patterns may be changed at different rhythms. For example, in the wallpaper 701, a first column of circular patterns sorted from left to right starts to play the animation effect from 0^{th}s of displaying the wallpaper, and a second column starts to play the animation effect from 1^{st}s of displaying the wallpaper. In this way, at a same moment, sizes of circular patterns in the first column and the second column are different. In this way, the circular patterns in the live wallpaper may be zoomed in and displayed at different rhythms.

In this embodiment, after the mobile phone 101 adjusts the wallpaper description information, the mobile phone 101 may vertically display, by using a color with low brightness and saturation, circular patterns in a rectangular array layout, and maintain the array layout in a process of displaying the live wallpaper. Each circular pattern may be zoomed in from a small size to a large size at different rhythms for display.

For example, after S202b, the smartwatch may perform S203b.

S203b: The smartwatch displays, based on the wallpaper description information, a live wallpaper that matches a device parameter of the smartwatch.

For example, because a screen size of the smartwatch 102a is small, when the smartwatch 102a adjusts the wallpaper description information, an initial size of the circular pattern in the wallpaper description information may be set to a small size, for example, zero, based on the screen size, so that when the smartwatch 102a displays the live wallpaper, an initial image of the watch face of the smartwatch 102a is empty, and then a size of each circular pattern is gradually zoomed in to a size of a target zoom in/out multiple, for example, a size shown in a pattern 713, to display a wallpaper 702 shown in (2) in FIG. 7. In a process in which the size dynamically changes, an array structure including circular patterns remains unchanged, and is still a circular array.

In this implementation, when the wallpaper is applied to a small screen device, initial sizes of some or all of patterns in the wallpaper may be adjusted to (for example, randomly adjusted) smaller initial sizes, so that sizes of the patterns are more suitable for the small screen device. For example, when the pattern is a combined pattern defined by using an array structure, adjustment of an initial size of the pattern does not change the array structure. For example, initial sizes of all patterns in the combined pattern may be adjusted, or initial sizes of patterns in an entire row (one row or a plurality of rows) in (2) in FIG. 7 may be adjusted. For example, for separate patterns that are in the wallpaper description information and that do not belong to any combined pattern, the small screen device may adjust initial sizes of one or more of the separate patterns to smaller sizes. This is not limited herein. In this way, in the live wallpaper displayed on the watch face of the smartwatch 102a, circular patterns combined in an array structure may be displayed from a size that is not zoomed in to a size of the target zoom in/out multiple.

For example, in the wallpaper description information generated by the smartwatch 102a, different triggering occasions of animation effect sequences may be set for patterns in the combined pattern, or different animation effect sequences may be set for different patterns in the combined pattern. In this way, although the combined pattern includes only one type of patterns of one size, the animation effect of the patterns may be changed at different rhythms.

For example, when adjusting the wallpaper description information, the smartwatch 102a may adjust, based on the screen resolution in the device form, the color parameter corresponding to the combined pattern to a bright color (for example, a color with high saturation). A specific color is not limited herein.

For example, as shown in (2) in FIG. 7, colors of circular patterns in different rows in the wallpaper 702 are different. Herein, different grayscales are used for illustration. In addition, the color parameter herein includes only three colors. Certainly, in this application, color layouts of circular patterns in different rows are not limited to color layouts in the wallpaper 702, and may alternatively be another color layout. This is not limited herein.

In this embodiment, after the smartwatch 102a adjusts the wallpaper description information, the smartwatch 102a may display, by using a bright color, the circular patterns in the rectangular array layout. Although a screen shape of the smartwatch 102a is a circle, an array shape of the rectangular array does not need to be adjusted to a circle. When drawing a pattern, the smartwatch 102a may draw the pattern based on the screen shape, to draw the wallpaper 702 of the circular watch face shown in (2) in FIG. 7. In addition, in a process of displaying the live wallpaper, a shape of the circular watch face may be maintained, and each circular pattern may be adjusted from a small size to a target size at different rhythms for display.

For example, after S202a, the tablet computer may perform S203c.

S203c: The tablet computer displays, based on the wallpaper description information, a live wallpaper that matches a device parameter of the tablet computer.

For example, when adjusting the wallpaper description information, the tablet computer 102b may zoom in, based on the screen size (belonging to a large screen device) in the device form and based on the screen size, an initial size of a circular pattern to a size of a circular pattern 714 shown in (3) in FIG. 7, so that when the tablet computer 102b displays a live wallpaper, a size of each circular pattern in the wallpaper on the screen of the tablet computer 102b may be gradually zoomed in from an initial size (which is a size obtained after zooming in) of the pattern 714 shown in (3) in FIG. 7 to a size of a target zoom in/out multiple, for example, a size of the pattern 715, to display a wallpaper 703 shown in (3) in FIG. 7. In a process in which the size dynamically changes, an array structure including the circular patterns remains unchanged, and is still a rectangular array. In this way, in a scenario in which a screen size is large, a pattern in the wallpaper displayed in this application may change from a large initial size, so that a pattern size of the wallpaper can apply to the screen size.

For example, (1) in FIG. 7 and (3) in FIG. 7 are compared, and the initial size (the size shown in the pattern 714) of the circular pattern in the screen wallpaper of the tablet computer 102b is greater than the initial size (for example, a size shown in the pattern 711) of the circular pattern in the live wallpaper of the mobile phone 101. In this way, when the live wallpaper on the screen of the tablet computer 102b is displayed, the circular pattern may be zoomed in to a size of a same target zoom in/out multiple starting from the initial size larger than the initial size of the pattern 711 of the mobile phone 101.

For example, in the wallpaper description information generated by the tablet computer 102b, different triggering occasions of animation effect sequences may be set for patterns in the combined pattern, or different animation effect sequences may be set for different patterns in the combined pattern. In this way, although the combined pattern includes only one type of patterns of one size, the animation effect of the patterns may be changed at different rhythms.

In this implementation, when the wallpaper is applied to a large screen device, initial sizes of some or all of patterns in the wallpaper may be adjusted to (for example, randomly adjusted) larger initial sizes, so that sizes of the patterns are more suitable for the large screen device. For example, when the pattern is a combined pattern defined by using an array structure, adjustment of an initial size of the pattern does not change the array structure. For example, initial sizes of all patterns in the combined pattern may be adjusted, or initial sizes of patterns in an entire row (one row or a plurality of rows) in (3) in FIG. 7 may be adjusted. For example, for separate patterns that are in the wallpaper description information and that do not belong to any combined pattern, the large screen device may adjust initial sizes of one or more of the separate patterns to larger sizes. This is not limited herein.

In this embodiment, after the tablet computer 102b adjusts the wallpaper description information, the tablet computer 102b may horizontally display, by using a color with low brightness and saturation, circular patterns in a rectangular array layout, and maintain the array layout in a process of displaying the live wallpaper. Each circular pattern may be zoomed in from a small size to a large size at different rhythms for display.

For example, the tablet computer 102c in FIG. 3A and FIG. 3B also belongs to a large screen device, and a principle of an adjustment policy of the tablet computer 102c for the wallpaper description information may be similar to that of the adjustment policy of the tablet computer 102b, and may be specifically different based on a requirement.

In an embodiment of FIG. 7, because an adjustment amount of a size ratio of the zooming in/out animation effect is a relative value relative to an initial size of a pattern, for example, a zooming in/out multiple. In this case, in FIG. 7, after the mobile phone 101, the smartwatch 102a, and the tablet computer 102b adjust the wallpaper description information, initial sizes of circular patterns corresponding to the devices are different, so that although the devices zoom in the circular patterns to the size of the target zoom in/out multiple based on a same animation effect parameter, sizes of the patterns that are zoomed in by the target zoom in/out multiple are different. As shown in (1) in FIG. 7, the size of the pattern 712, the size of the pattern 713, and the size of the pattern 715 are display effect of sizes of the circular patterns in wallpapers currently displayed on respective devices.

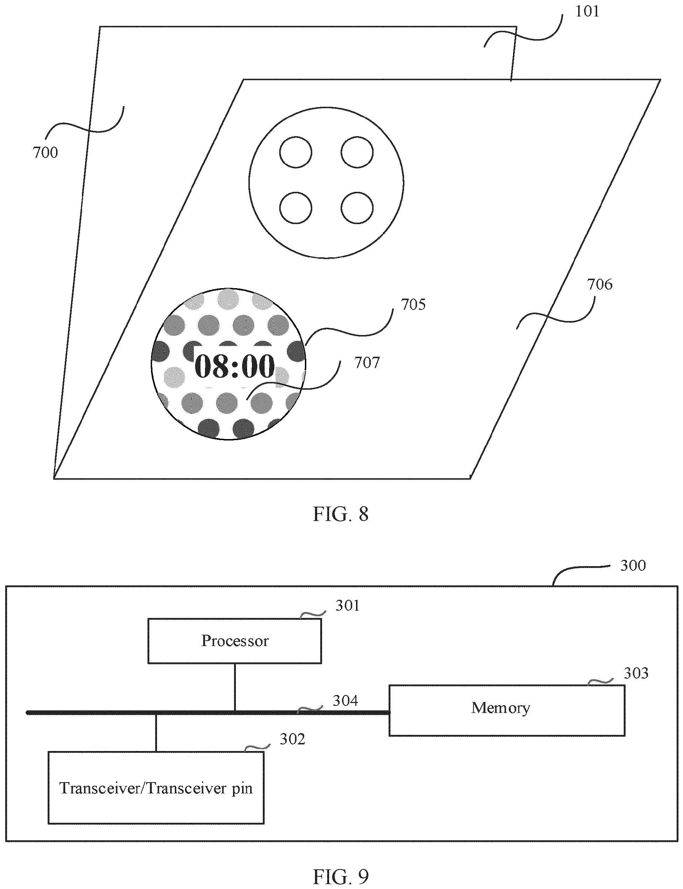

For example, the mobile phone 101 in (1) in FIG. 7 may alternatively be a foldable mobile phone. For example, the mobile phone 101 in (1) in FIG. 7 may be in a folded state shown in FIG. 8. As shown in FIG. 8, the mobile phone 101 may include a home screen 700 and a back surface 706 opposite to the home screen 700, the back surface 706 may include a camera module 704 and a circular display 705.

As shown in FIG. 8, when the mobile phone 101 is in the folded state, the mobile phone 101 may display, on the display 705, a live wallpaper obtained after adaptation display is performed on the generated wallpaper description information. The display 705 shown in FIG. 8 shows an example of a frame of static image of the live wallpaper, for example, a wallpaper 707.

For example, the display 705 shown in FIG. 8 has a small size and a circular shape. For example, the mobile phone 101 may use a specific manner of adjusting the wallpaper description information by the smartwatch 102a described in the implementation of (2) in FIG. 7, to implement display of the live wallpaper on the circular display 705. For a specific principle and process, refer to related descriptions in (2) in FIG. 7. Details are not described herein.

In this way, even for a same electronic device, when the electronic device has a plurality of displays, the electronic device may flexibly adjust the wallpaper description information based on a parameter (for example, a screen size, a screen shape, or a display aspect ratio) of a display of a to-be-displayed screen wallpaper, to generate a live wallpaper that can be adaptively displayed on the display.

Certainly, FIG. 7 and FIG. 8 are merely examples in which the electronic device adjusts the wallpaper description information. In another implementation, the electronic device may further adjust another description parameter of the wallpaper description information with reference to a device parameter, for example, adjust an animation effect type.

For example, the wallpaper description information may include a plurality of animation effect types. In this case, live wallpapers displayed on different electronic devices or different displays of a same electronic device may separately correspond to different animation effect types.

For example, an animation effect type of the live wallpaper displayed on the home screen 700 of the mobile phone 101 shown in (1) in FIG. 7 is zooming in/out animation effect, and an animation effect type of the live watch face of the smartwatch 102a shown in (2) in FIG. 7 is rotation animation effect, an animation effect type of the live wallpaper of the tablet computer 102b shown in (3) in FIG. 7 may be translation animation effect, and an animation effect type of the live wallpaper displayed on the display 705 of the mobile phone 101 shown in FIG. 8 may be color changing animation effect.

In a possible implementation, the electronic device may adjust, based on device performance, a description parameter that is in the wallpaper description information and that is related to the device performance, so that a live wallpaper generated based on the adjusted wallpaper description information can match the device performance. For example, the electronic device may disable some animation effect in the wallpaper description information, add some animation effect, or adjust animation effect parameters of some animation effect. For another example, the electronic device may properly select, based on an element category (a primary element, a secondary element, or a background element) to which a pattern in the wallpaper description information belongs and the device performance, a pattern of a corresponding element category for drawing and displaying.

For example, if the electronic device is a device that is sensitive to power consumption and that has low computing power due to low device performance, for example, the smart band 102d shown in FIG. 4b, the electronic device may disable blurring animation effect in the wallpaper description information, to ensure that when the device with low computing power plays a live wallpaper, a display process of the animation effect is smooth.

For example, priorities of element categories in descending order are: the primary element, the secondary element, and the background element. In this case, the low-performance smart band may choose to draw and display only the primary element in the wallpaper description information based on a description parameter of the primary element, and cancel display of the secondary element and the background element.

In a possible implementation, the electronic device may adjust, based on the device form, a description parameter (for example, a size of a pattern and a color parameter of the pattern) that is in the wallpaper description information and that is related to the device form, so that a live wallpaper generated based on the adjusted wallpaper description information can match the device form.

In a possible implementation, the electronic device may adjust, based on an interaction manner of the device, a description parameter that is in the wallpaper description information and that is related to the interaction manner of the device. As described above, which candidate parameter or candidate parameters of a pattern changed by the animation effect is/are related to the interaction manner of the device may be defined in the animation effect parameter. However, for the generated wallpaper description information, in the animation effect parameter, a specific interaction manner related to the candidate parameter is not specified. In this implementation, when adjusting the wallpaper description information based on the interaction manner of the electronic device, the electronic device may associate (for example, bind) the candidate parameter changed by the animation effect with a specific interaction manner, so that a parameter value of the candidate parameter may change with triggering of the interaction manner of the device.

For example, with reference to FIG. 7, for example, when adjusting the wallpaper description information, the mobile phone 101 in (1) in FIG. 7 may associate a pattern size changed by the zooming in/out animation effect of the live wallpaper with an unlocking operation of the home screen 700 of the mobile phone 101. In this way, when the user triggers a screen unlocking operation on the mobile phone 101, the mobile phone 101 may play the zooming in/out animation effect corresponding to the wallpaper 701 on the home screen 700 in response to the user operation. For a specific change process of an animation displayed by the animation effect, refer to the description in (1) in FIG. 7. Details are not described herein.

For example, with reference to (1) in FIG. 7 and FIG. 8, the mobile phone 101 is a foldable mobile phone. When adjusting the wallpaper description information, the mobile phone 101 may associate a pattern size changed by the zooming in/out animation effect of the live wallpaper with a screen folding operation of the mobile phone 101. In this way, when the user triggers the folding operation on the mobile phone 101 shown in (1) in FIG. 7, so that the mobile phone 101 is in the folded state shown in FIG. 8, and the mobile phone 101 may play, in response to the user operation, the zooming in/out animation effect corresponding to the wallpaper 707 on the display 705 shown in FIG. 8. For a specific change process of the animation displayed by the animation effect, refer to the description in FIG. 8. Details are not described herein.

For example, with reference to (2) in FIG. 7, for example, when adjusting the wallpaper description information, the smartwatch 102a in (2) in FIG. 7 may associate a pattern size changed by the zooming in/out animation effect of the live wallpaper with a rotation operation of a watch crown of the smartwatch 102a. In this way, when the user triggers the rotation operation on the watch crown of the smartwatch 102a, the smartwatch 102a plays the zooming in/out animation effect corresponding to the wallpaper 702 on the screen of the smartwatch 102a in response to the user operation. For a specific change process of the animation displayed by the animation effect, refer to the description in (2) in FIG. 7. Details are not described herein.

For example, with reference to the implementations in FIG. 6e, FIG. 6f, and FIG. 6g, when adjusting the wallpaper description information, the smartwatch 102a may associate the pattern size and a pattern angle that are respectively changed by the zooming in/out animation effect and the rotation animation effect of the live wallpaper with the rotation operation of the watch crown of the smartwatch 102a. In this way, when the user triggers the rotation operation on the watch crown of the smartwatch 102a, the smartwatch 102a plays the zooming in/out animation effect and zooming in animation effect that correspond to the wallpaper on the screen of the smartwatch 102a in response to the user operation, to present the kaleidoscope animation effect shown in FIG. 6g, and present blooming effect on the watch face of the watch. For a specific change process of an animation displayed by the animation effect, refer to the foregoing descriptions of FIG. 6e, FIG. 6f, and FIG. 6g. Details are not described herein.

In a possible implementation, the electronic device may adjust, based on application data of the device, a description parameter that is in the wallpaper description information and that is related to the application data of the device. As described above, which candidate parameter or candidate parameters of a pattern changed by the animation effect is/are related to the application data of the device may be defined in the animation effect parameter. However, for the generated wallpaper description information, in the animation effect parameter, a specific type of application data is not specified for the application data related to the candidate parameter. In this implementation, when adjusting the wallpaper description information based on the application data of the electronic device, the electronic device may associate (for example, bind) the candidate parameter changed by the animation effect with specific application data, so that a parameter value of the candidate parameter may change with a change of the application data of the device, and the animation effect is related to the change of the application data.

For example, when adjusting the wallpaper description information, the mobile phone 101 shown in (1) in FIG. 7 may associate a candidate parameter (for example, a color parameter) that is in the wallpaper description information and that may be associated with application data with specified application data (for example, a quantity of movement steps herein), and add an animation effect sequence related to the quantity of movement steps to the animation effect sequence in the wallpaper description information. For example, the animation effect sequence related to the quantity of movement steps may describe a change degree of the color parameter of the pattern in cases of different quantities of movement steps.

For example, to facilitate setting of the animation effect sequence, the quantity of movement steps may be processed after normalization. For example, the animation effect sequence may include that when the quantity of steps is in an interval of [0, 0.3), a corresponding color value is 1; when the quantity of steps is in an interval of [0.3, 0.5), the corresponding color value is 2; and when the quantity of steps is in an interval of [0.5, 1], the corresponding color value is 3. In this way, when the interval corresponding to the quantity of movement steps changes, a color of the circular pattern in the live wallpaper of the mobile phone 101 may change.

It should be understood that specific content of the animation effect sequence that is related to the application data and that is added to the animation effect sequence in this application is not limited to the foregoing example based on the fitness data. An implementation principle of the animation effect sequence related to the application data is similar to the foregoing principle of the animation effect sequence related to time. Details are not described herein.

In a possible implementation, the electronic device may adjust the initial sizes of some or all of patterns in the wallpaper description parameter not only based on the device form, for example, based on the screen size and the screen shape of the device, so that when a same set of wallpaper description information is applied to different electronic devices to display live wallpapers, live wallpapers finally displayed are not completely the same. According to another aspect, in a possible implementation, each time the electronic device generates wallpaper description information for a same to-be-processed image, the electronic device may also adjust a parameter value of a description parameter in the wallpaper description information within a small range, so that even if the user uses a same photo to generate a live wallpaper on the mobile phone each time, the live wallpaper generated each time is different. In this way, richness of the live wallpaper displayed by the electronic device does not completely depend on richness of the to-be-processed image, so that diversity of the live wallpaper can be improved.

For example, when displaying the live wallpaper based on the adjusted wallpaper description information, the electronic device may fill a color of a corresponding pattern in the wallpaper description information based on the color parameter, and display a dynamic change of the pattern based on the animation effect parameter.

For example, the live wallpaper in this application is superimposed effect in which each pattern (which may be a single pattern or a combined pattern) or each element (a primary element, a secondary element, or a background element) in the wallpaper description information has a motion change based on an animation effect corresponding to the pattern or the element.

For example, when the live wallpaper is displayed, a pattern of a corresponding color is displayed, and some or all of patterns may change according to a motion rule defined in a corresponding animation effect parameter, to obtain complex display effect of the live wallpaper.

For example, when the live wallpaper may be applied to different device forms, different device performance, interaction manners of different devices, or application data of different devices, the electronic devices may display, with reference to respective device parameters, live wallpapers that match the respective device parameters.

The following describes the technical solutions of this application by using specific examples.

The mobile phone may use a photo taken by the mobile phone, including but not limited to a wearing photo, a landscape photo, and the like, and identify a pattern type in the photo by using a pre-trained model, for example, identify a type (a line, a grid, or the like) of a pattern on clothes in the wearing photo, or identify a type of an object (for example, a mountain or a tree) in the landscape photo.

The mobile phone may match, based on a predefined matching relationship between a pattern type and an image, the pattern type identified from the photo with an image in Gallery, to obtain one or more images (also referred to as one or more "image templates") that match the pattern type in the photo.

The matched image may include a complex pattern, and a pattern in the image may be used as a combined pattern (a scalable vector pattern herein) in the wallpaper description information. In other words, the matched image may be considered as a unique pattern in the wallpaper description information. Optionally, the image already has information about a shape, a size, and a location of the pattern, and the information about the location and the size of the pattern does not need to be separately defined for the image. Optionally, the mobile phone may further define at least one initial transformation operation of initial zooming in/out, translation, and rotation for the image, to change the pattern included in the image or information such as the size and the location of the pattern.

The mobile phone may generate a set of wallpaper description information for each matched image. In this case, when a plurality of images are matched, a plurality of sets of wallpaper description information may be generated, and the user selects which set of wallpaper description information is used as a data basis of the live wallpaper. When a set of wallpaper description information is generated for an image, because the image already includes a pattern and information about a size and a location of the pattern, the mobile phone only needs to define a color and animation effect for the image, to generate a set of corresponding wallpaper description information.

In another aspect, the mobile phone may further extract color information from the photo taken by the user (referred to as an "original image" for short).

Then, the mobile phone may perform a series of processing operations on the extracted color information to obtain a color list.

For example, the processing operation includes but is not limited to: operations such as removing an unsuitable color, combining similar colors, improving contrast and brightness of a color, selecting a plurality of candidate colors based on a quantity of colors in the original image, and generating an adjacent color, a contrast color, and a gradient color by using the candidate colors, so that the mobile phone obtains the color list.

In addition, the mobile phone may alternatively use a color rule specific to the image template to assign coloring objects to colors in the color list. For example, if the image template is a flower pattern, after the mobile phone sends the wallpaper description information to the smartwatch, when generating the live wallpaper, the smartwatch may select a warm color and a cold color from the color list to respectively fill a petal and a leaf of the flower pattern.

When generating a set of wallpaper description information for each image template, the mobile phone may use a color list processed based on the foregoing color processing process as color information of the image template.

In addition, the mobile phone may further define an animation effect parameter for the pattern template. In this way, wallpaper description information of the image template is generated.

Optionally, the wallpaper description information may alternatively include a plurality of image templates, and each image template may have a color parameter and an animation effect parameter of the image template.

Finally, the mobile phone sends the wallpaper description information to an electronic device like a smartwatch or a tablet computer, to generate a respective live wallpaper of the smartwatch or the tablet computer. This process may be implemented in the following manner:

An example in which the smartwatch generates a live wallpaper and the wallpaper description information includes one image template is used for description. The smartwatch may fill a color in the image template by using a color parameter in the wallpaper description information. For example, the smartwatch may fill a color of a graph in the image template by using the processed color mentioned above. During color filling, a plurality of processed colors may be used, or the adjacent color, the contrast color, the gradient color, or the like of colors in the original image may be used.

Optionally, when the mobile phone generates the wallpaper description information, the mobile phone may further identify a texture type from the original image, for example, a fabric texture of clothes or a leather texture of a bag. In this case, when generating the live wallpaper, and when filling the image template with a color, the smartwatch may superimpose, on the image template, a texture pattern that matches the identified texture type, so that the processed image template has texture effect consistent with that of the original image.

After the smartwatch fills the color and/or adds the texture to the image template, the smartwatch may obtain a target image.

Finally, the smartwatch may add animation effect, for example, animation effect such as zooming in/out, translation, or rotation, to the target image based on the animation effect parameter of the image template in the wallpaper description information, to generate the live wallpaper and display the live wallpaper on the watch face of the smartwatch.

Optionally, as described above, the wallpaper description information may alternatively include a plurality of image templates. In this case, when generating the live wallpaper, the smartwatch may generate one target image for each image template, and each target image further has a corresponding animation effect parameter. When generating the live wallpaper, the smartwatch may add respective animation effect to each target image, and generate, based on a superposition relationship that is between different target images and that is defined in the wallpaper description information, a live wallpaper having superposition effect of animation effects of a plurality of target images.

The superposition relationship between the plurality of target images may be multilayer superposition based on layer levels, or may be superposition in a form of specific array structure. This is not limited herein.

Optionally, when the mobile phone generates wallpaper description information for an image template, or when an electronic device like a smartwatch that receives the wallpaper description information parses the wallpaper description information (which may include an adjustment operation), an impact factor may be further combined, to change an initial state of the image template corresponding to the wallpaper description information. In this way, the electronic device generates different wallpaper description information each time by using a same image template, and/or when the electronic device generates a live wallpaper by using same wallpaper description information, effect of the live wallpaper generated each time is different.

For example, an example in which the smartwatch changes the initial state of the image template in the wallpaper description information is used for description.

When changing the initial state (which may be any description parameter of the image template in the wallpaper description information) of the image template, the smartwatch may set initial graphic transformation for the image template, for example, perform initial transformation such as cropping, zooming in/out, rotation, translation, and mask adding on the image template. This is not limited herein.

For example, when changing the initial state of the image template, the smartwatch may further set a coloring style for the image template, for example, oil painting or sketching. This is not limited herein.

For example, the impact factor may be some information extracted from the original image, for example, a color of the original image or a histogram of the original image.

For example, the impact factor may alternatively be data obtained from an electronic device (the mobile phone) side that generates the wallpaper description information, for example, system time and fitness and health data.

For example, the mobile phone may change the initial state of the image template by using the system time as the impact factor. This may affect the initial state of the live wallpaper generated based on the image template, and may also ensure that even if the mobile phone uses the same image template each time to generate the wallpaper description information, wallpaper description information generated each time is different. In this way, the live wallpaper generated each time may be different.

For another example, the smartwatch may change the initial state of the image template by using the system time as the impact factor. Each time the live wallpaper is displayed based on same wallpaper description information, there may be a difference in changing the initial state of the image template each time. In this way, the live wallpaper generated each time may be different.

It should be understood that the impact factor may further include other data that can affect wallpaper generation. This is not limited herein.

In this implementation, the smartwatch may affect initial transformation, a style, and the like of the wallpaper by using the impact factor, so that when a quantity of image templates in a local image library (referred to as Gallery) is limited, the live wallpaper or a static wallpaper generated by the smartwatch each time is also different.

Optionally, the smartwatch may further bind some parameters (for example, candidate parameters) of an image template whose animation effect can be changed in the wallpaper description information to fitness and health data. In this way, when the fitness and health data changes, the live wallpaper may change, so that a wallpaper status can change with the fitness and health data.

Optionally, the smartwatch may play the live wallpaper based on a user interaction manner. For example, when the screen is on, the smartwatch may play the live wallpaper, or when the live wallpaper is applied to the smartwatch for wallpaper display, the smartwatch may play the live wallpaper when the user rotates the watch crown. When no event corresponding to the interaction manner is triggered, the electronic device controls not to play the live wallpaper or to play the live wallpaper cyclically.

Optionally, the smartwatch may further determine, with reference to device performance and a user preference, that the wallpaper generated based on the wallpaper description information is a static wallpaper, where the static wallpaper is a frame of the live wallpaper.

Optionally, the mobile phone may further generate a sequence frame of the live wallpaper or an image of the static wallpaper by using an agent module in the mobile phone, to send the sequence frame or the image to the smartwatch as the watch face for display.

Optionally, when the wallpaper used as the watch face is generated on the smartwatch based on the wallpaper description information, the smartwatch may match a clock style for the watch face. If the watch face is generated based on an image template, the smartwatch uses a clock style corresponding to the image template as the clock style that matches the watch face. In addition, the smartwatch may further calculate a color of an element like a number, a date, a pointer, or a scale of a clock according to a predefined color rule. For example, the color may have higher contrast than that of the wallpaper of the smartwatch, to ensure distinguishability between clock information and the background color. In this way, the user can distinguish between the watch face (the wallpaper herein) and the clock information (for example, the number, the date, the pointer, and the scale) of the smartwatch by using the color.

It should be noted that, in the accompanying drawings mentioned above, same reference numerals represent same objects. Therefore, the reference numerals in the accompanying drawings are not described one by one. For a reference numeral that is not mentioned in the foregoing accompanying drawings, refer to the description of the same reference numeral that has been mentioned. Details are not described herein.

It may be understood that, to implement the foregoing functions, the electronic device includes corresponding hardware and/or software modules for performing the functions. With reference to algorithms and steps in examples described in embodiments disclosed in this specification, this application can be implemented by hardware or a combination of hardware and computer software. Whether a function is performed by hardware or computer software driving hardware depends on a specific application and a design constraint condition of the technical solution. A person skilled in the art may use different methods to implement the described functions for each specific application with reference to embodiments. However, it should not be considered that the implementation goes beyond the scope of this application.

In an example, FIG. 9 is a block diagram of an apparatus 300 according to an embodiment of this application. The apparatus 300 may include a processor 301 and a transceiver/transceiver pin 302, and optionally, further include a memory 303.

Components of the apparatus 300 are coupled together by using a bus 304. In addition to a data bus, the bus 304 further includes a power bus, a control bus, and a status signal bus. However, for clear description, various types of buses in the figure are marked as the bus 304.

Optionally, the memory 303 may be configured to store instructions in the foregoing method embodiments. The processor 301 may be configured to: execute the instructions in the memory 303, control a receive pin to receive a signal, and control a transmit pin to send a signal.

The apparatus 300 may be the electronic device or a chip of the electronic device in the foregoing method embodiments.

All related content of the steps in the foregoing method embodiments may be cited in function descriptions of the corresponding functional modules. Details are not described herein.

This embodiment further provides a computer storage medium. The computer storage medium stores computer instructions, and when the computer instructions are run on an electronic device, the electronic device is enabled to perform the related method steps, to implement the screen wallpaper display method in the foregoing embodiments.

This embodiment further provides a computer program product. When the computer program product runs on a computer, the computer is enabled to perform the foregoing related steps, to implement the screen wallpaper display method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the screen wallpaper display method in the foregoing method embodiments.

The electronic device, the computer storage medium, the computer program product, or the chip provided in this embodiment is configured to perform the corresponding method provided above. Therefore, for beneficial effect that can be achieved, refer to beneficial effect of the corresponding method provided above. Details are not described herein.

Based on the foregoing descriptions of the implementations, a person skilled in the art may understand that for the purpose of convenient and brief description, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed system, apparatus, and method may be implemented in other manners. For example, the described apparatus embodiment is merely an example. For example, the module or division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed to different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

Any content in embodiments of this application and any content in a same embodiment can be freely combined. Any combination of the foregoing content falls within the scope of this application.

When the integrated unit is implemented in a form of software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read only memory (erasable programmable ROM, EPROM), an electrically erasable programmable read only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device. Certainly, the processor and the storage medium may exist in the network device as discrete components.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium that facilitates transmission of a computer program from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. A screen wallpaper display method, wherein the method is applied to a system comprising a first electronic device and at least one second electronic device, the first electronic device is communicatively connected to the at least one second electronic device, and the method comprises:
separately sending, by the first electronic device, at least one piece of wallpaper description information to the at least one second electronic device, wherein
the at least one piece of wallpaper description information comprises parameter information used to describe a live wallpaper; and
displaying, by each electronic device in the system, a respective live wallpaper on a screen of the respective device based on respective wallpaper description information, wherein animation effect of live wallpapers displayed by different electronic devices in the system is different.

2. The method according to claim 1, wherein animation effect of live wallpapers displayed by different electronic devices in the system matches device parameters of the respective electronic devices.

3. The method according to claim 2, wherein the device parameter comprises at least one of the following:
device performance, a device form, a device interaction manner, and application data.

4. The method according to claim 3, wherein the displaying, by each electronic device in the system, a respective live wallpaper on a screen of the respective device based on respective wallpaper description information comprises:
in response to a received first user operation, playing, by each electronic device in the system, animation effect of the respective live wallpaper on the screen of the respective device based on the respective wallpaper description information, wherein
the first user operation is a user operation corresponding to the device interaction manner of each electronic device.

5. The method according to any one of claims 1 to 4, wherein the wallpaper description information separately sent by the first electronic device to the at least one second electronic device is the same.

6. The method according to any one of claims 1 to 4, wherein the wallpaper description information separately sent by the first electronic device to the at least one second electronic device is different.

7. The method according to claim 6, wherein the wallpaper description information separately received by the at least one second electronic device from the first electronic device matches a device parameter of the respective device.

8. The method according to any one of claims 1 to 7, wherein before the separately sending, by the first electronic device, at least one piece of wallpaper description information to the at least one second electronic device, the method further comprises:
generating, by the first electronic device, the at least one piece of wallpaper description information.

9. The method according to claim 8, wherein wallpaper description information generated at least twice by the first electronic device based on a same image is different.

10. The method according to any one of claims 1 to 9, wherein live wallpapers displayed at least twice by a same electronic device in the system on a screen of the electronic device based on same wallpaper description information are different.

11. The method according to any one of claims 1 to 10, wherein the system further comprises at least one third electronic device, the first electronic device is communicatively connected to the at least one third electronic device, and the method further comprises:
separately generating, by the first electronic device based on the at least one piece of wallpaper description information, a display result of a live wallpaper that matches a device parameter of the at least one third electronic device, wherein the display result comprises a frame sequence or a frame of static wallpaper image;
sending, by the first electronic device, the corresponding display result corresponding to the at least one third electronic device to the corresponding third electronic device; and
displaying, by the at least one third electronic device on a screen of the respective device, the corresponding display result received by the at least one third electronic device.

12. The method according to any one of claims 1 to 11, wherein the at least one piece of wallpaper description information comprises an animation effect parameter acting on a pattern, wherein the animation effect parameter indicates a change rule of the pattern in the live wallpaper.

13. The method according to claim 12, wherein the pattern comprises a combined pattern, and patterns in the combined pattern have an array relationship.

14. The method according to claim 13, wherein when the combined pattern in the live wallpaper changes according to a change rule indicated by a corresponding animation effect parameter, the array relationship of the patterns in the combined pattern remains unchanged.

15. The method according to claim 13 or 14, wherein the animation effect parameter of the combined pattern comprises parameter information used to change a target array parameter of the array relationship.

16. The method according to any one of claims 13 to 15, wherein
when the combined pattern in the live wallpaper changes based on the corresponding animation effect parameter, a ratio relationship between the target array parameter of the combined pattern and a candidate parameter of the combined pattern remains unchanged; and
the candidate parameter is a parameter that is of the combined pattern and that is changed by the animation effect parameter of the combined pattern.

17. The method according to any one of claims 1 to 16, wherein animation effect of live wallpapers displayed on different displays of a same electronic device in the system is different.

18. The method according to claim 17, wherein animation effect of live wallpapers displayed on different displays of a same electronic device in the system matches parameters of the displays of the electronic device.

19. A screen wallpaper display method, wherein the method is applied to a first electronic device, and the method comprises:
displaying, by the first electronic device, a live wallpaper on a screen of the first electronic device based on first wallpaper description information; and
sending, by the first electronic device, at least one piece of second wallpaper description information to at least one second electronic device, wherein the at least one second electronic device is configured to display a respective live wallpaper on a screen of the respective device based on the respective second wallpaper description information, and animation effect of live wallpapers displayed by the first electronic device and the at least one second electronic device is different, wherein
any piece of wallpaper description information comprises parameter information used to describe a live wallpaper.

20. The method according to claim 19, wherein animation effect of live wallpapers displayed by different electronic devices matches device parameters of the respective electronic devices.

21. The method according to claim 20, wherein the device parameter comprises at least one of the following:
device performance, a device form, a device interaction manner, and application data.

22. The method according to claim 21, wherein that the at least one second electronic device displays the respective live wallpaper on the screen of the respective device based on the respective second wallpaper description information comprises:
in response to a received first user operation, each electronic device in the at least one second electronic device plays animation effect of the respective live wallpaper on the screen of the respective device based on the respective second wallpaper description information, wherein
the first user operation is a user operation corresponding to the device interaction manner of each second electronic device.

23. A screen wallpaper display method, wherein the method is applied to a second electronic device, and the method comprises:
receiving, by the second electronic device, wallpaper description information sent by a first electronic device; and
displaying, by the second electronic device, a live wallpaper on a screen of the second electronic device based on the wallpaper description information, wherein animation effect of the live wallpaper displayed by the second electronic device is different from animation effect of a live wallpaper displayed by the first electronic device based on the wallpaper description information.

24. The method according to claim 23, wherein the animation effect of the live wallpaper displayed by the second electronic device matches a device parameter of the second electronic device.

25. The method according to claim 24, wherein the device parameter comprises at least one of the following:
device performance, a device form, a device interaction manner, and application data.

26. The method according to claim 25, wherein the displaying, by the second electronic device, a live wallpaper on a screen of the second electronic device based on the wallpaper description information comprises:
in response to a received first user operation, playing, by the second electronic device, the animation effect of the live wallpaper on the screen of the second electronic device based on the wallpaper description information, wherein
the first user operation is a user operation corresponding to the device interaction manner.

27. A screen wallpaper display system, comprising the first electronic device according to any one of claims 1 to 18 and at least one second electronic device.

28. A screen wallpaper display apparatus, wherein the apparatus is configured to perform the screen wallpaper display method according to any one of claims 19 to 22, or perform the screen wallpaper display method according to any one of claims 23 to 26.

29. An electronic device, comprising a memory and a processor, wherein the memory is coupled to the processor, the memory stores program instructions, and when the program instructions are executed by the processor, the electronic device is enabled to perform the screen wallpaper display method according to any one of claims 19 to 22, or perform the screen wallpaper display method according to any one of claims 23 to 26.

30. A computer-readable storage medium, comprising a computer program, wherein when the computer program is run on an electronic device, the electronic device is enabled to perform the screen wallpaper display method according to any one of claims 19 to 22, or perform the screen wallpaper display method according to any one of claims 23 to 26.

31. A computer program product comprising instructions, wherein when the computer program product runs on a computer, the computer is enabled to perform the screen wallpaper display method according to any one of claims 19 to 22, or perform the screen wallpaper display method according to any one of claims 23 to 26.

32. A chip, comprising one or more interface circuits and one or more processors, wherein the interface circuit is configured to: receive a signal from a memory of an electronic device, and send the signal to the processor, wherein the signal comprises computer instructions stored in the memory, and when the processor executes the computer instructions, the electronic device is enabled to perform the screen wallpaper display method according to any one of claims 19 to 22, or perform the screen wallpaper display method according to any one of claims 23 to 26.
